(19) **Europäisches Patentamt / European Patent Office / Office européen des brevets**

(11) **EP 3 355 104 B2**

(12) # NEUE EUROPÄISCHE PATENTSCHRIFT
Nach dem Einspruchsverfahren

(45) Veröffentlichungstag und Bekanntmachung des Hinweises auf die Entscheidung über den Einspruch:
**01.06.2022 Patentblatt 2022/22**

(45) Hinweis auf die Patenterteilung:
**12.12.2018 Patentblatt 2018/50**

(21) Anmeldenummer: **17153651.9**

(22) Anmeldetag: **27.01.2017**

(51) Internationale Patentklassifikation (IPC):
**G02C 13/00** (2006.01)   **G06T 7/10** (2017.01)
**G06K 9/46** (2006.01)

(52) Gemeinsame Patentklassifikation (CPC):
**G02C 13/003; G02C 13/005; G06T 7/12;**
**G06T 7/149; G06V 40/171;** G06T 2207/10012;
G06T 2207/10024; G06T 2207/10028

(54) **VERFAHREN UND VORRICHTUNG SOWIE COMPUTERPROGRAMM ZUM ERMITTELN EINER REPRÄSENTATION EINES BRILLENGLASRANDS**

METHOD AND DEVICE AND COMPUTER PROGRAM FOR DETERMINING A REPRESENTATION OF A SPECTACLE GLASS RIM

PROCÉDÉ ET DISPOSITIF AINSI QUE PROGRAMME INFORMATIQUE DESTINÉS À DÉTERMINER UNE REPRÉSENTATION D'UN BORD DE VERRE DE LUNETTES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**01.08.2018 Patentblatt 2018/31**

(73) Patentinhaber:
• **Carl Zeiss Vision International GmbH**
 **73430 Aalen (DE)**
• **Carl Zeiss AG**
 **73447 Oberkochen (DE)**

(72) Erfinder:
• **Nieuwenhuis, Claudia**
 **D-73457 Essingen (DE)**
• **Schwarz, Oliver**
 **D-73492 Rainau (DE)**

(74) Vertreter: **Gauss, Nikolai et al**
**Pfiz/Gauss Patentanwälte PartmbB**
**Tübingerstraße 26**
**70178 Stuttgart (DE)**

(56) Entgegenhaltungen:
WO-A1-2014/198888   DE-A1-102009 004 383
DE-A1-102011 115 239   DE-A1-102011 115 239
DE-A1-102014 012 452   DE-A1-102014 013 447
US-A- 4 852 184   US-A1- 2016 246 078
US-A1- 2016 299 360

• **DIANA BORZA ET AL: "Eyeglasses Lens Contour Extraction from Facial Images Using an Efficient Shape Description", SENSORS, Bd. 13, Nr. 10, 10. Oktober 2013 (2013-10-10), Seiten 13638-13658, XP055227455, CH ISSN: 1424-8220, DOI: 10.3390/s131013638**
• **CLAUDIA NIEUWENHUIS ET AL: "Spatially Varying Color Distributions for Interactive Multilabel Segmentation", IEEE TRANSACTIONS ON PATTERN ANALYSIS AND MACHINE INTELLIGENCE, IEEE COMPUTER SOCIETY, USA, Bd. 35, Nr. 5, 17. August 2012 (2012-08-17), Seiten 1234-1247, XP011497447, ISSN: 0162-8828, DOI: 10.1109/TPAMI.2012.183**
• **FERNÁNDEZ ALBERTO ET AL: "Glasses detection on real images based on robust alignment", MACHINE VISION AND APPLICATIONS, SPRINGER VERLAG, DE, Bd. 26, Nr. 4, 31. März 2015 (2015-03-31), Seiten 519-531, XP035501562, ISSN: 0932-8092, DOI: 10.1007/S00138-015-0674-1 [gefunden am 2015-03-31]**
• **CE LIU ET AL: "Automatic eyeglasses removal from face images", IEEE TRANSACTIONS ON PATTERN ANALYSIS AND MACHINE INTELLIGENCE, IEEE COMPUTER SOCIETY, USA, Bd. 26, Nr. 3, 1. März 2004 (2004-03-01), Seiten 322-336, XP011106115, ISSN: 0162-8828, DOI: 10.1109/TPAMI.2004.1262319**

- ZHONG JING et al.: "Glasses Detection and Extraction by Deformable Contour", Proceedings 15th International Conference on Pattern Recognition . ICPR-2000, vol. 2, 2000, pages 933-936, Barcelona, Spain DOI: 10.1109/ICPR.2000.906227
- PAUL URTHALER: "GLASSES DETECTION AND SEGMENTATION FROM FACE PORTRAIT IMAGES", Master's Thesis, December 2008 (2008-12), Graz University of Technology Retrieved from the Internet: URL:https://www.tugraz.at/fileadmin/user_u pload/Institute/ICG/Images/team_bischof/mi b/paper_pdfs/StudentsMasterTheses/DA_urtha ler.pdf
- KAP-HO SEO et al.: "Face detection and facial feature extraction using color snake", Proceedings of the 2002 IEEE International Symposium, vol. 2, 2002, pages 457-462,
- SEOK-WOO JANG et al.: "Shaking snakes using color edge for contour extraction", Proceedings International Conference on Image Processing, vol. 2, 22 September 2002 (2002-09-22), pages 817-820, Rochester, NY, USA
- DIANA BORZA et al.: "Eyeglasses Lens Contour Extraction from Facial Images Using an Efficient Shape Description", Sensors, vol. 13, no. 10, 10 October 2013 (2013-10-10), pages 13638-13658, ISSN: 1424-8220
- CLAUDIA NIEUWENHUIS et al.: "Spatially Varying Color Distributions for Interactive Multilabel Segmentation", IEEE TRANSACTIONS ON PATTERN ANALYSIS AND MACHINE INTELLIGENCE, vol. 35, no. 5, 1 May 2013 (2013-05-01), pages 1234-1247, USA ISSN: 0162-8828
- FERNANDEZ ALBERTO et al.: "Glasses detection on real images based on robust alignment", MACHINE VISION AND APPLICATIONS, vol. 26, no. 4, 31 March 2015 (2015-03-31) , pages 519-531, DE ISSN: 0932-8092
- CE LIU et al.: "Automatic eyeglasses removal from face images", IEEE TRANSACTIONS ON PATTERN ANALYSIS AND MACHINE INTELLIGENCE, vol. 26, no. 3, 1 March 2004 (2004-03-01), pages 322-336, USA ISSN: 0162-8828
- M. Kass, A. Witkin und D. Terzopoulos: ?Snakes: Active contour models", International Journal of Computer Vision, 321-331 (1988),Kluwer Academic Publishers, Boston https.//doi.org/10.1007/BF00133570
- Xu Chenyang & Prince Jerry: "Gradient Vector Flow: A New External Force for Snakes" Conference Paper in Proceedings / CVPR, IEEE Computer Society Conference on Computer Vision and Pattern Recognition; pages 66-71; July 1997; DOI:10.1109/CVPR.1997.609299
- L. Schwarz, H.R. Gamba, F. Pacheco, R.B. Ramos and M.A.Sovierzoski, "Pupil and iris detection in dynamic pupillometry using the Open CV library", 2012, 5th International Congress on Image and Signal Processing, Chongqing, 2012, pp. 211-215, DOI:10.1109/CISP.2012.6469846
- Chenyu Wu, Ce Liu, Heung-Yueng Shum, Ying-Qing Xy and Zhengyou Zhang, "Automatic eyeglasses removal from face images," in IEEE Transactions on Pattern Analysis and Machine Intelligence, vol. 26, no.3, pp. 322-336, March 2004, DOI: 10.1109/TPAM1.2004.1262319
- B. Hariharan, P. Arbelaez, L. Bourdev, S. Maji and J. Malik: "Semantic Contours from Inverse Detectors", 2011 IEEE International Conference on Computer Vision, 6-13 Nov. 2011, pages 991-998, DOI:10.1109/ICCV.2011.6126343, Electronic ISBN:978-1-4577-1102-2

**EP 3 355 104 B2**

**Beschreibung**

Die Erfindung betrifft ein computerimplementiertes Verfahren und eine Vorrichtung zum automatischen Ermitteln einer Repräsentation des Rands wenigstens eines Brillenglases für einen Brillenträger. Darüber hinaus betrifft die Erfindung ein Computerprogramm, mit dem das vorgenannte Verfahren durchgeführt werden kann.

Unter der Repräsentation des Rands eines Brillenglases versteht die Erfindung eine Repräsentation des in der Norm EN ISO 13666:2012 (D/E) in Abschnitt 13.1 aufgeführten Tragrands des Brillenglases.

Eine Repräsentation des Rands eines Brillenglases ist ein Datensatz, aus dem sich der dreidimensionale Verlauf des dem Brillenträger abgewandten Tragrands des Brillenglases gegebenenfalls auf der Grundlage von zusätzlichen das Brillenglas beschreibenden Größen eindeutig bestimmen lässt. Eine Repräsentation des Rands eines Brillenglases kann z. B. die von der Projektion des Rands des Brillenglases in der Bildebene eines Bildsensors einer Bildaufnahmeeinrichtung umgebene Fläche sein, in die das Brillenglas für die Bilderfassung abgebildet wird.

Bei einer Vollrandbrille entspricht der Tragrand eines Brillenglases einem Brillenfassungsinnenrand. Bei einer Teilrandbrille ist unter dem Tragrand eines Brillenglases zum einen der dem Brillenfassungsinnenrand entsprechende Rand eines Brillenglases und der nicht an die Brillenglasfassung angeschlossene Glasaußenrand zu verstehen. Der Tragrand eines Brillenglases in einer randlosen Brille ist der Glasaußenrand.

Um die Brillengläser korrekt in eine Brillenfassung einzupassen, ist es zum einen erforderlich, sogenannte Zentrierparameter zu bestimmen, damit die optischen Zentren der Gläser mit den visuellen Achsen der entsprechenden Augen in Deckung gebracht werden können, um so z. B. die Information über die Pupillendistanz und die Information über die Höhe der Pupillen in Bezug auf die Brillenfassung zu kennen. Zum anderen ist es erforderlich, den durch die Brillenfassung vorgegebenen Tragrand des Brillenglases zu kennen, in der das Brillenglas aufgenommen werden soll.

Neben der Information der Pupillendistanz und der Information über die Höhe der Pupillen in Bezug auf die Brillenfassung werden unter den Begriff Zentrierparameter insbesondere folgende Größen subsumiert: monokularer Pupillenabstand PD, Hornhautscheitelabstand HS nach Bezugspunktforderung und/oder nach Augendrehpunktforderung, monokularer Zentrierpunktabstand, Zentrierpunktkoordinaten, Scheibenabstand, Dezentration des Zentrierpunktes, Scheibenhöhe und -breite, Scheibenmittenabstand, Brillenglasvorneigung $\alpha$, Fassungsscheibenwinkel $\beta$, Einschleifhöhe.

Die Zentrierparameter werden regelmäßig von einem Augenoptiker bestimmt. Wichtige Zentrierparameter sind z.B. in der Norm EN ISO 13666:2012 (D/E) definiert und können ermittelt werden, indem sich ein Optiker und ein Proband gegenüber stehen oder sitzen, wobei der Proband die Fassung seiner Wahl mit einer darin eingefassten Glasscheibe aufsetzt. Der Proband wird gebeten, in die Ferne zu blicken, und der Optiker zeichnet dann nach Augenschein auf der Scheibe oder auf einer Kontaktstrichfolie mit einem Kreuz den Durchblick an, wie er ihn beim gegenseitigen Anblick erkennt. Dieses Kreuz (Zentrierkreuz) bestimmt dann die Lage des optischen Mittelpunktes des in die Fassung einzusetzenden Brillenglases. Dieses Verfahren wird für jedes der Augen eines Probanden einzeln durchgeführt. Der Abstand der auf diese Weise ermittelten Zentrierkreuze ist der Pupillenabstand PD.

Für die Zentrierparameterbestimmung werden aber mittlerweile auch automatisierte Messsysteme eingesetzt. Ein solches Messsystem ist z. B. in der WO 01/84222 A1 beschrieben. Dieses System enthält eine an einer Säule höhenverstellbar aufgenommene digitale Videokamera, deren Objektiv zusammen mit einem Spiegel und einer Lichtquelle im Bereich der Frontfläche des Gehäuses angeordnet ist. Das System ermöglicht insbesondere das Messen von Abständen und das Erfassen von Maßen, die für das Einschleifen von Brillengläsern zu berücksichtigen sind. In dem System gibt es einen mit der digitalen Videokamera verbundenen Computer, der aus dem Bild eines Brillenträgers mit einer Brillenfassung und mit einem an der Brillenfassung festgelegten Messbügel Zentrierparameter für die Brillenfassung mittels Bildauswertung bestimmt.

Für einen Augenoptiker, der Endkunden berät, ist es wichtig, dass die Zentrierparameterbestimmung möglichst einfach, schnell und zuverlässig durchgeführt werden kann. Damit der Augenoptiker die Endkunden qualitativ hochwertig beraten kann, sind deshalb Arbeitsflüsse von Interesse, die inhärent fehlerfrei sind und die sich zügig durchführen lassen.

In D. Borza et al., Eyeglasses Lens Contour Extraction from Facial Images Using an Efficient Shape Description", Sensors, Bd. 13, Nr. 10, S. 13638 - 13658 (2013) ist ein computerimplementiertes Verfahren der eingangs genannten Art für das Bestimmen des Randes von Brillengläsern in einem erfassten Bild eines Brillenträgers beschrieben, bei dem die Punktemenge der auf dem Rand der Brillengläser liegenden Bildpunkte als eine Überlagerung von auf der Definition von sogenannten Fourrier-Deskriptoren basierenden mathematischen Funktionen modelliert wird. Diese mathematischen Funktionen beschreiben unterschiedliche Brillenrand-Formen. Die hier für das Modellieren des Randes von Brillengläsern verwendeten Funktionen werden stochastisch, d. h. nach einem Zufallsprinzip, aus einer endlichen Menge möglicher Funktonen ausgewählt. Das anhand der ausgewählten Funktionen beschriebene Modell für den Rand der Brillengläser wird dann mit einem in einem Kantendetektionsverfahren ermittelten Brillenglasrand verglichen und bewertet.

In C. Nieuwenhuis et al.,Spatially Varying Color Distributions for Interactive Multilabel Segmentation, IEEE Transactions on Pattern Analysis and Machine Intelligence, IEEE Comüuter Society, USA, Bd. 35, Nr. 5, S. 1234 - 1247 (2013) ist ein Verfahren für das Segmentieren unterschiedlicher Bereiche in digitalen Bildern beschrieben. Hier wird die Farbe von Bildpunkten in den digitalen Bildern bewertet. Dazu markiert eine Bedienperson an einem Computer unterschiedliche Bildbereiche, die segmentiert werden sollen, manuell z. B. mit einer Computermaus. Die unterschiedlichen Bildbereiche werden dann durch Optimieren einer auf bedingten Wahrscheinlichkeiten beruhenden Kostenfunktion segmentiert. Hierfür wird für einen jeden Bildpunkt der Bilder anhand der Farbinformation zu den manuell markierten Bildbereichen die bedingte Wahrscheinlichkeit maximiert, dass der Bildpunkt in einem bestimmten Bildbereich liegt.

In A. Fernandez et al., Glasses detction on real images based on robust a-lignment", Machine Vision and Applications, Springer Verlag, Bd. 26, Nr. 4, S. 519 - 531 (2015) ist ein Verfahren für das Bewerten von Personenaufnahmen offenbart, um hier zu erkennen, ob die Personen Brillenträger sind. Dieses Verfahren bewertet unveränderliche Gesichtsmerkmale von Personen unter Verwendung von Beispieldaten aus einer Datenbank, in der charakteristische Daten zu Personen mit und ohne Brille abgespeichert sind.

Aus C. Wu et al., Automatic Eyeglasses removal from Face Images, IEEE Transactions on Pattern Analysis and Machine Intelligence, IEEE Comüuter Society, USA, Bd. 26, Nr. 3, S. 332 - 336 (2004) offenbart ein Verfahren, das zur Entfernung von Brillen und Brillengläsern aus digitalen Personenaufnahmen dient. Das Verfahren benutzt dabei stochastisch ausgewählte gelernte Modelle für ein Brillengestell.

Die DE 10 2011 115 239 A1 5 beschreibt, in einem digitalen Bild eines Brillenträgers die Kontur des Randes der Brillengläser unter Rückgriff auf einen Brillenglas-spezifischen Tracerdatensatz zu ermitteln, der die Information des Brillenglasrandes enthält.

Aufgabe der Erfindung ist es, eine genaue Repräsentation des Rands eines Brillenglases anzugeben, das in einer Brillenfassung aufgenommen werden soll, z. B. um diese Information bei der Bestimmung von Zentrierparametern zu berücksichtigen.

Zur Lösung dieser Aufgabe werden die in dem Patentanspruch 1 und dem Patentanspruch 15 angegebenen Merkmalskombinationen vorgeschlagen. Vorteilhafte Ausgestaltungen und Weiterbildungen der Erfindung ergeben sich aus den abhängigen Ansprüchen.

Für einen Augenoptiker ist es von Bedeutung, bei dem Bestimmen von Zentrierparametern einen möglichst schnellen und fehlerfreien Arbeitsfluss zu haben, um eine hohe Qualität der Beratung zu erzielen, die den Endkunden im Fokus hat und nicht von technischen Prozessen dominiert ist. In diesem Zusammenhang ist eine möglichst störungsfreie Funktionsweise (Robustheit) der automatischen Verfahren notwendig. Dies kann mit Methoden der digitalen Bildanalyse und des maschinellen Lernens erreicht werden.

Die Erfinder haben erkannt, dass mit Methoden der digitalen Bildanalyse erreicht werden kann, den Rand von an eine vorgegebene Brillenfassung angepassten Brillengläsern nicht nur mit hoher Genauigkeit zu ermitteln, sondern auch mit großer Zuverlässigkeit auf eine gegenüber Fehlereinflüssen sehr robuste Art und Weise.

Erfindungsgemäß werden zum Ermitteln der Repräsentation des Rands eines Brillenglases oder eines linken Brillenglases und eines rechten Brillenglases für einen Brillenträger folgende Schritte ausgeführt:

Es werden Bilddaten b(x) zu dem Brillenträger mit einer getragenen Brillenfassung bereitgestellt.

Es werden aus den Bilddaten b(x) abgeleitete Informationsdaten I(x) berechnet.

Es wird eine die Informationsdaten I(x) mit Brillenglasdaten u(x) verknüpfende Kostenfunktion E(u) berechnet, wobei die Brillenglasdaten u(x) die räumliche Ausdehnung wenigstens eines in der Brillenfassung gehaltenen Brillenglases beschreiben, und es wird dann der Verlauf eines Rands des Brillenglases oder des linken Brillenglases und des rechten Brillenglases durch Optimieren der Kostenfunktion E(u) festgelegt.

Erfindungsgemäß kann die Kostenfunktion E(u) eine Summe gewichteter Energieterme sein. Indem die Kostenfunktion E(u) unter der Zwangsbedingung optimiert wird, dass Abweichungen von einem Farbmodell oder einem Brillenglasmodell bestraft und Spiegelungen an einem Brillenglas oder einer Brillenfassung berücksichtigt werden, kann eine hohe Genauigkeit für eine Repräsentation des Rands eines an eine Brillenfassung angepassten Brillenglases erzielt werden. Zwangsbedingungen bei dem Optimieren der Kostenfunktion können auch an eine Repräsentation des Rands eines Brillenglases gestellte 2D- oder 3D-Symmetriebedingungen sein. Von Vorteil ist es, wenn das Optimieren der Kostenfunktion E(u) nur innerhalb eines Interessengebiets (Region of Interest) erfolgt, das durch die detektierten Gesichtsmerkmale festgelegt ist.

Zu bemerken ist, dass eine Kostenfunktion E(u) auf mehrere Arten minimiert werden kann, z. B. über kontinuierliche Methoden (primal-dual-Ansätze), diskrete Graph-Cut Methoden, Active Contour Modelle oder ähnliches. Kontinuierliche Methoden sind dadurch definiert, dass sie das Bild als kontinuierliche Funktion beschreiben und dadurch die Kostenfunktion auf einem kontinuierlichen mathematischen Raum definiert ist. Die Diskretisierung der Kostenfunktion auf Basis von Bildpunkten in Bilddaten u(x) (Pixelbasis) erfolgt bevorzugt erst in einem letzten Schritt vor der Optimierung. Im Gegensatz dazu definieren sogenannte diskrete Optimierungsmethoden die Optimierungsfunktion direkt auf der Ebene von Bildpunkten (Pixelebene). Kontinuierliche Methoden haben gegenüber diskreten Methoden den Vorteil, dass sie Artefakte an Kanten vermeiden und sehr viel leichter parallelisierbar sind, was schnelle Berechnungen auf einer Graphikkarte ermöglicht.

Die aus den Bilddaten b(x) abgeleiteten berechneten Informationsdaten I(x) können ein aus den erfassten Bilddaten b(x) mittels eines Kantendetektionsalgorithmus ermitteltes Kanteninformationsbild g(x) umfassen. Auf diese Weise lassen sich in einem Bild des Gesichts eines Brillenträgers Brillenfassungen erkennen. Der Kantendetektionsalgorithmus kann z.B. einen Kantendetektor enthalten. Ein solcher Kantendetektor ermöglicht es, in den Bilddaten b(x) Bildpunkte zu detektieren, die lichtempfindlichen Pixeln in der Bildebene des Bildsensors einer Bilderfassungseinrichtung entsprechen und die auf Kanten der Brillenfassung liegen. Dabei wird für jeden Bildpunkt eine die Wahrscheinlichkeit für eine Kante repräsentierender Wert angegeben, mit der er zur Brillenkante gehört. Der Kantendetektor kann auch ein sogenannter allgemeiner Kantendetektor sein, der jede Art von Bildkante detektiert, oder er kann speziell auf Brillenkanten trainiert worden sein. Auf diese Weise kann z. B. zwischen Brillenfassungskanten und Nicht-Brillenfassungskanten oder zwischen einer äußeren Brillenfassungskante und der inneren Brillenfassungskante unterschieden werden.

Der Kantendetektor in dem Kantendetektionsalgorithmus kann insbesondere ein Kantendetektor aus der Gruppe Gradient, Farbgradient, Canny-Edge-Detektor, gerichtetes Filter, Solbelfilter sein. Es ist möglich, dass der Kantendetektionsalgorithmus für die Kantendetektion auf eine Filterbank mit einer Menge von Filtern wie z.B. Gaborfiltern oder gelernten Filtern zugreift. Von Vorteil ist es auch, wenn der Kantendetektionsalgorithmus als ein selbstlernender Algorithmus ausgebildet ist.

Die Erfinder haben herausgefunden, dass mit Hilfe sogenannten maschinellen Lernens erreicht werden kann, dass das Ermitteln des Rands eines Brillenglases, das an eine Brillenfassung angepasst ist, nicht nur mit hoher Genauigkeit sondern auch mit großer Zuverlässigkeit in einer Weise gewährleistet werden kann, die gegenüber Fehlereinflüssen sehr robust ist.

Eine Idee der Erfindung ist es, dass die aus den Bilddaten b(x) abgeleiteten berechneten Informationsdaten I(x) ein aus den erfassten Bilddaten b(x) mittels eines die Farbe von Bilddaten b(x) auswertenden Farbauswertungsalgorithmus ermitteltes Farbinformationsbild f(x) umfassen. Die Kostenfunktion E(u) kann insbesondere eine gewichtete Summe eines Kantendetektionskostenterms $E_{edge}(u)$ und eines Farbauswertungskostenterms $E_{color}(u)$ sein.

Ein solcher Farbauswertungsalgorithmus dient dazu, Bildpunkte, die auf einem Brillenglas liegenden Punkten entsprechen, von Bildpunkten zu unterscheiden, die auf der Brillenfassung liegenden Punkten oder in dem Hintergrund der Brillenfassung liegenden Punkten entsprechen. Der Farbauswertungsalgorithmus kann hierzu ein Farbmodell benutzen, z.B. ein Hautfarbmodell, das Bildpunkte, die Punkten in dem Gesicht des Brillenträgers entsprechen, von Bildpunkten trennt, die auf der Brillenfassung liegenden Punkten entsprechen. Von Vorteil ist es auch, in dem Algorithmus das Bild mit einem Tiefpassfilter stark zu glätten, um auf diese Weise eine Annäherung an das Gesicht des Brillenträgers ohne Brillenfassung zu erhalten. Diese Näherung kann dann ein Farbmodell für innerhalb des Brillenglases liegende Bildpunkte bilden. Um eine Annäherung an das Gesicht des Brillenträgers ohne Brillenfassung zu erhalten ist es auch möglich, dass der Algorithmus eine Routine für maschinelles Lernen auf der Basis von Beispieldaten zu Personen ohne eine Brillenfassung enthält oder eine Routine, die aus den Bilddaten b(x) zu dem Brillenträger mit der Brillenfassung mittels sogenannter Principal Component Analysis einen Datensatz generiert, der einem Bild des Gesichts des Brillenträgers bzw. einem Bild eines Ausschnitts des Gesichts des Brillenträgers ohne die Brillenfassung entspricht.

Im Rahmen des Farbauswertungsalgorithmus kann auch ein Wechsel des Farbraums von dem RGB-Farbraum in einen Farbraum vorgesehen sein, der Helligkeit und Farbe trennt, z.B. ein Wechsel in den YCbCr-Raum oder den HSV-Farbraum. Diese Maßnahme ermöglicht es, vergleichsweise beleuchtungsunabhängig zu arbeiten. Es sei bemerkt, dass im Rahmen der Erfindung ein Farbraum auch aus einer Vielzahl von mehreren Bildern entsprechenden Bilddaten b(x) gelernt werden kann. Außerdem sei bemerkt, dass im Rahmen der Erfindung vorgesehen sein kann, anhand von bekannten Hautfarbpunkten in Bilddaten b(x), z.B. anhand von Bildpunkten, die Punkten auf einem Nasenrücken entsprechen, einen passenden Hautfarbraum zu definieren. Günstiger Weise ist bei dem Farbauswertungsalgorithmus mit einem solchen Farbmodell dann vorgesehen, die Information des Abstands von Bildpunkten in den erfassten Bilddaten von den Augen des Brillenträgers auszuwerten, um zu berücksichtigen, dass Bildpunkte, die nahe an den Augen liegen des Brillenträgers liegen, mit einer höheren Wahrscheinlichkeit in dem Bereich von in der Brillenfassung aufgenommenen Brillengläsern liegen als Bildpunkte in den Bilddaten b(x), die von den Augen des Brillenträgers einen großen Abstand haben. In dem Farbauswertungsalgorithmus kann hierfür z.B. eine Distanzfunktionsroutine vorgesehen sein, die für einen jeden Bildpunkt, d.h. ein jedes Pixel eines Bildsensors 15 einer Bildaufnahmeeinrichtung den kürzesten Abstand zu einem Bildpunkt, d.h. einem Pixel des entsprechenden Bildsensors berechnet, der auf den Augen des Brillenträgers liegt. Je größer dieser ermittelte kürzeste Abstand ist, desto höhere Kosten werden dann in dem Farbterm der Kostenfunktion zum Ansatz gebracht.

Eine bevorzugte Ausführungsform der Erfindung sieht vor, dass als Kostenfunktion E(u) für das Auffinden der gesuchten Brillenglasdaten u(x) eine konvexe Funktion ausgewählt wird.

Unter einer konvexen Funktion wird vorliegend wie in der Analysis eine reellwertige Funktion verstanden, deren Graph unterhalb jeder Verbindungsstrecke zweier seiner Punkte liegt. Dies ist gleichbedeutend dazu, dass der Epigraph der Funktion, also die Menge der Punkte oberhalb des Graphen, eine sogenannte konvexe Menge ist.

Die Konvexität der Kostenfunktion E(u) erreicht die Erfindung insbesondere dadurch, dass diese eine Summe von konvexen Kostenfunktionstermen ist. Z.B. kann die Kostenfunktion aus einem konvexen Farbkostenterm $E_{color}(u(x))$, der die Farbe der Bilddaten b(x) mit Brillenglasdaten u(x) korreliert und mittels eines Farbmodells bewertet und einem konvexen Kantenkostenterm $E_{edge}(u(x))$ gebildet sein, der eine Korrelation von Bildkanten in den Bilddaten b(x) mit den Brillenglasdaten u(x) oder mit den durch eine Ableitung von Brillenglasdaten b(x) repräsentierten Rand 26 eines Brillenglases 28 oder zweier Brillengläser 28, 29 ist.

Die Konvexität der Konstenfunktion bringt drei große Vorteile mit sich: Im Allgemeinen haben Funktionen globale und lokale Optima. Deshalb garantieren Optimierungsverfahren nur das Finden eines lokalen Optimums, nicht des globalen Optimums. Bei konvexen Funktionen wird dagegen immer das globale Optimum gefunden, da keine lokalen Optima existieren. Bei konvexen Kostenfunktionen kann ein beliebiger Startwert (z.B. u(x) = 0 = schwarze Fläche ohne Brillenglas) verwendet werden, da das Verfahren immer zu einem globalen Optimum konvergiert. Bei nicht-konvexen Funktionen ist ein guter Startwert, der nahe am globalen Optimum liegt, notwendig, um gute Ergebnisse zu erhalten. Bei konvexen Kostenfunktionen führen sogar einfachste Optimierungsverfahren wie der Gradientenabstieg immer zu einem globalen Optimum.

Von Vorteil ist es, wenn das Berechnen von aus den Bilddaten abgeleiteten Informationsdaten I(x) das Ermitteln von Spiegelungsinformationsdaten s(x) mit einem Algorithmus für das Erkennen von Spiegelungen an der Brillenfassung und/oder eines in der Brillenfassung aufgenommenen Brillenglases umfasst. Dabei ist es von Vorteil, wenn dieser Algorithmus so ausgelegt ist, dass Spiegelungen auf einem Brillenglas von Spiegelungen auf der Brillenfassung unterschieden werden können. Auf diese Weise kann ebenfalls die Genauigkeit der ermittelten Repräsentation des Rands eines Brillenglases gesteigert werden. Von Vorteil für die Genauigkeit des Verfahrens ist es auch, wenn der Farbauswertungsalgorithmus und der Kantendetektor die aus den Bilddaten b(x) berechneten Spiegelungsinformationsdaten s(x) berücksichtigt, da Spiegelungen in einem Bild starke, störende Kanten haben, die leicht mit dem Glasrand verwechselt werden können.

Das Berechnen von aus den Bilddaten b(x) abgeleiteten Informationsdaten I(x) kann das Ermitteln von Gesichtsmerkmalsinformationsdaten m(x) mit einem Algorithmus für das Erkennen von Gesichtsmerkmalen umfassen.

Eine Idee der Erfindung ist es auch, dass der Algorithmus für das Erkennen von Gesichtsmerkmalen für das Erkennen eines oder mehrerer Gesichtsmerkmale aus der Gruppe Auge, Pupille, Augenbraue, Nase oder Mund ausgelegt ist. Insbesondere ist es möglich, dass der Farbauswertungsalgorithmus und/oder der Kantendetektionsalgorithmus die aus den Bilddaten b(x) berechneten Gesichtsmerkmalsinformationsdaten m(x) berücksichtigt. Weil auch die Augen eines Brillenträgers in den auf erfassten Bilddaten b(x) beruhenden Bildern Kanten hervorrufen, die das Ermitteln des Rands von Brillengläsern stören, ist es von Vorteil, wenn auch der Kantendetektionsalgorithmus von den Augen des Brillenträgers hervorgerufene Kanten in auf erfassten Bilddaten b(x) beruhenden Bildern berücksichtigt, indem aus den Bilddaten b(x) berechneten Gesichtsmerkmalsinformationsdaten m(x) ausgewertet werden.

Um das Gesicht und die sogenannte Region of Interest, in der sich die Brillenfassung, d.h. die Brille im Bild befindet, zu bestimmen, kann die Detektion von Gesichtsmerkmalen hilfreich sein. Gesichtsmerkmale sind in diesem Fall z.B. eine oder mehrere Merkmale aus der Gruppe Augen, Position der Pupillen, Augenbrauen, Nase und/oder Mund eines Gesichts. Basierend auf einem oder mehreren Merkmalen kann man berechnen, in welchem Bereich die Brillenkanten gesucht werden. Außerdem sind mit den Augen Punkte bekannt, die auf jeden Fall innerhalb des Glases liegen.

Für das Berechnen von aus den Bilddaten b(x) abgeleiteten Informationsdaten I(x) kann das Ermitteln von Brillenglasforminformationsdaten di(x) mit einem Algorithmus vorgesehen sein, der anhand eines dem Algorithmus zugeführten Brillenglasmodells oder anhand einer Vielzahl von dem Algorithmus zugeführten Brillenglasmodellen als Brillenglasforminformationsdaten di(x) ein parametrisches Modell oder eine Wahrscheinlichkeiten repräsentierende Karte über die Wahrscheinlichkeit angibt, dass erfasste Bilddaten auf einem Brillenglas liegen. Insbesondere kann vorgesehen sein, dass das Berechnen von aus den Bilddaten abgeleiteten Informationsdaten I(x) das Ermitteln von Brillenglasforminformationsdaten di(x) mit einem Algorithmus umfasst, der anhand eines dem Algorithmus zugeführten Brillenglasmodells oder anhand einer Vielzahl von dem Algorithmus zugeführten Brillenglasmodellen als Brillenglasforminformationsdaten di(x) eine 2D-Form oder eine 3D-Form eines in der Brillenfassung aufnehmbaren Brillenglases angibt.

Eine Idee der Erfindung ist es z.B., mittels von Hand vorsegmentierten Beispielen für Brillengläser ein Modell für die Form eines Brillenglases zu bestimmen. Ein solches Modell kann eine Wahrscheinlichkeitskarte sein, die für jeden Bildpunkt in erfassten Bilddaten b(x) angibt, wie wahrscheinlich es ist, dass der diesem Bildpunkt entsprechende Punkt innerhalb des Brillenglases liegt. Es ist allerdings auch möglich, die Form von Brillengläsern in parametrischen Modellen zu schätzen, z.B. aus dem Brillenglas als Fläche in der Bildansicht oder aus den einer Brillenglaskontur entsprechenden Punkten. Die Parameter dieser Modelle können dann optimiert werden. Darüber hinaus ist zu bemerken, dass ein Modell auch als eine Nebenbedingung in der Optimierung verwendet werden kann, z. B. als Nebenbedingung, dass die finale Kontur innerhalb des zuvor gelernten Modellraumes liegt. Es versteht sich, dass anstatt Modelle aus Beispielen zu lernen im Rahmen der Erfindung auch entsprechende Modelle definiert werden können, z.B. Modelle, die auf sogenannten Tracerdaten z.B. in Form von 3D-Koodinaten oder in Form von 2D-Koordinaten basieren, die mittels eines den Verlauf von Fassungsinnenrändern in einer Brillfassung abtasteten Tracer-Gerät bereitgestellt werden.

Von Vorteil ist es, wenn der Farbauswertungsalgorithmus die aus den Bilddaten b(x) berechneten Brillenglasforminformationsdaten di(x) berücksichtigt. Die aus den Bilddaten b(x) abgeleiteten berechneten Informationsdaten I(x) können auch eine mittels eines Brückenmittendetektionsalgorithmus ermittelte Brückenmitte M umfassen. Darüber hinaus ist es möglich, dass den bereitgestellten Bilddaten b(x) zu dem Brillenträger aus wenigstens zwei unterschiedlichen Blickwinkeln aufgenommene Bilder zugrunde liegen.

Die aus den Bilddaten b(x) abgeleiteten berechneten Informationsdaten I(x) können weiter ein mittels eines Triangulationsalgorithmus aus den Bilddaten b(x) oder aus den Brillenglasdaten u(x) ermittelte Tiefenkartendaten t(x) umfassen. Dabei ist es von Vorteil, wenn die Kostenfunktion E(u) in einem Kostenfunktionsterm als eine Zwangsbedingung berücksichtigt, dass ein in einer Brillenfassung aufgenommenes linkes und ein rechtes Brillenglas zueinander symmetrisch sind. Dies kann z.B. dadurch geschehen, dass die Kostenfunktion mit einer Stereobedingung aufeinander abgebildete Punkte in Brillenglasdaten u(x) zu Bildern bewertet, die unterschiedlichen Aufnahmerichtungen der Bilderfassungseinrichtungen entsprechen, z.B. z.B. indem ein 3D-Punkt in dem Gesicht des Brillenträgers, d.h. ein Punkt mit Tiefeninformation in mehrere Bilder abgebildet wird, so dass entsprechende Punkte in auf den Bilddaten b(x) basierenden Bildern in einem jedem Bild entweder einem Brillenglas oder einem hinter einem Brillenglas liegenden Hintergrund zugeordnet werden.

Zu bemerken ist, dass die Kostenfunktion für das Auffinden der gesuchten Brillenglasdaten u(x) auch einen Symmetriekostenterm $E_{sym}(u(x))$ enthalten kann der in den Bilddaten b(x) enthaltene Symmetrien mit Brillenglasdaten u(x) korreliert.

Eine Idee der Erfindung ist es, hierfür die Information der Brückenmitte M einer Brillenfassung heranzuziehen, um eine 3D-Spiegelebene für die Brillengläser zu definieren. Bei Frontalaufnahmen ermöglicht die Brückenmitte M auch, die Brillenglasdaten u(x) für ein linkes und ein rechtes Brillenglas aufeinander anzupassen und für die Anpassung eine Symmetrie-Zwangsbedingung (Symmetrie-Constraint) zu formulieren. Die Brückenmitte M kann auch geschätzt werden, indem die Mitte des linken und rechten inneren Glasrandes von Brillengläsern berechnet wird.

Initial kann die Brückenmitte M z. B. mit Hilfe der Mittelpunkte zwischen den detektierten Pupillenmitten, der Position des Nasenrücken oder einer gewichteten Kombination beider Merkmale bestimmt werden.

Indem Bilddaten b(x) mit Bilderfassungseinrichtungen erfasst werden, die das Gesicht des Brillenträgers mit einer von diesem getragenen Brillenfassung aus verschiedenen Blickwinkeln aufnehmen und indem zu diesen Bilderfassungseinrichtungen Kalibrier-Informationen bekannt sind, ist es möglich durch Triangulation zu dem Gesicht des Probanden mit der Brillenfassung die vorstehend erwähnte Tiefenkarte t(x) in Form einer Punktewolke zu berechnen. Aus dieser Punktewolke lässt sich dann die Form von 3D-Brillengläsern z. B. als Ebenen in einer Approximation an die wahre Kontur der Brillengläser schätzen. Aus diesen Ebenen kann dann mittels einer Spiegelebenen-Zwangsbedingung, die an die Kostenfunktion gestellt wird, eine Symmetrie der Brillenfassung in drei Dimensionen sichergestellt werden. Im Rahmen der Erfindung können diese 3D-Informationen dann auch dazu verwendet werden, Zentrierparameter zu berechnen.

Ein erfindungsgemäßer Algorithmus für das Berechnen des Rands von Brillengläsern, d.h. die Brillenkontur durch Minimierung einer Kostenfunktion mittels einer Optimierungsroutine kann also eine oder mehrere Routinen aus der Gruppe Kantendetektionsroutine, Farbauswertungsroutine, Spiegelungsroutine, Brillenglas-Lageroutine, Triangulationsroutine, Brückenmitten-Erkennungsroutine, Gesichtsmerkmal-Erkennungsroutine, Routine für das Schätzen des 3D-Verlaufs von Brillengläsern enthalten.

Die Erfindung erstreckt sich auch auf ein Computerprogramm mit Programmcode, welcher, wenn in einem Computersystem geladen und ausgeführt, zur Durchführung eines Verfahrens nach einem der vorangegangenen Ansprüche ausgelegt ist.

Eine erfindungsgemäße Vorrichtung zum Ermitteln des Verlaufs des Rands eines Brillenglases für einen Brillenträger enthält wenigstens eine Bilderfassungseinrichtung zum Bereitstellen von Bilddaten b(x) zu dem Brillenträger mit einer getragenen Brillenfassung und hat Mittel zum Berechnen von aus den Bilddaten b(x) abgeleiteten Informationsdaten I(x), Mittel zum Berechnen einer die Informationsdaten I(x) mit Brillenglasdaten u(x) verknüpfenden Kostenfunktion E(u), wobei die Brillenglasdaten u(x) die räumliche Ausdehnung wenigstens eines in der Brillenfassung gehaltenen Brillenglases beschreiben, und Mittel zum Festlegen eines Verlaufs eines Rands des Brillenglases durch Optimieren der Kostenfunktion E(u).

Im Folgenden wird die Erfindung anhand eines in der Zeichnung in schematischer Weise dargestellten Ausführungsbeispiels näher erläutert. Es zeigen

Fig. 1    eine Vorrichtung zum Ermitteln einer Repräsentation des Rands der beiden Brillengläser in einer Brillenfassung

Fig. 2    eine Repräsentation des Rands eines linken und eines rechten auf die Brillenfassung abgestimmten Brillenglases;

Fig. 3a    bis

Fig. 3f    verschiedene Zentrierparameter für ein Brillenglas;

Fig. 4    einen Algorithmus eines Computerprogramms zum Ermitteln einer Repräsentation des Rands der in eine Brillenfassung eingepassten Brillengläser;

Fig. 5     Bilddaten zu einem Brillenträger mit einer Brillenfassung;

Fig. 6     Gesichtsmerkmale eines Brillenträgers mit einer Brillenfassung;

Fig. 7     ausgewählte Bilddaten zu einem Brillenträger mit einer Brillenfassung;

Fig. 8     ein Kanteninformationsbild;

Fig. 9     ein Farbinformationsbild;

Fig. 10    ein Informationsbild zu ersten Spiegelungen;

Fig. 11    ein Informationsbild zu zweiten Spiegelungen;

Fig. 12    eine Glasmodell-Wahrscheinlichkeitskarte;

Fig. 13    Bilddaten mit einer Brückenmitte;

Fig. 14    Tiefenkarteninformationsdaten;

Fig. 15    eine erste Repräsentation von Brillenglasdaten;

Fig. 16    Werte einer Kostenfunktion für unterschiedliche Brillenglasdaten; und

Fig. 17    bis

Fig. 22    weitere Repräsentationen von Brillenglasdaten.

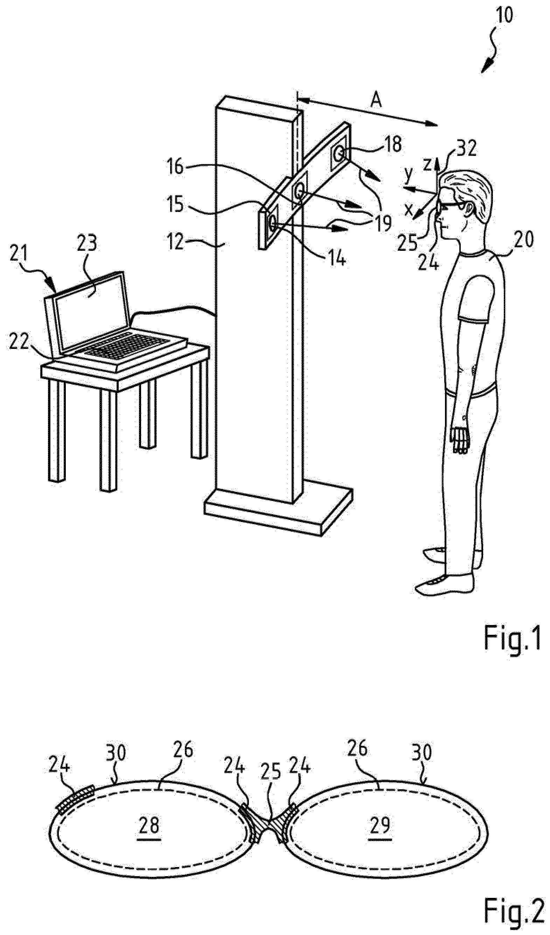

Die in der Fig. 1 gezeigte Vorrichtung 10 ist ein kamerabasiertes Zentriersystem und ermöglicht das Ermitteln einer Repräsentation des Rands der beiden Brillengläser in einer Brillenfassung. Die Vorrichtung 10 hat eine Säule 12, die relativ zueinander referenzierte Bildaufnahmeeinrichtungen 14, 16, 18 mit Bildsensoren 15 für das Erfassen von Bilddaten eines Brillenträgers 20 trägt. Sie enthält eine mit den Bildaufnahmeeinrichtungen 14, 16, 18 verbundene Rechnereinheit 21 mit einer Tastatur als Eingabeschnittstelle 22 und einer Ausgabeschnittstelle 23 in Form eines Monitors.

Für das Erfassen von Bilddaten mittels der Bildaufnahmeeinrichtungen 14, 16, 18 positioniert sich der Brillenträger 20 z. B. in einem Optikfachgeschäft mit einer ausgewählten Brillenfassung 24 in einem Aufnahmeabstand A ≈ 30 cm von der Säule 12. Mittels der Bildaufnahmeeinrichtungen 14, 16, 18 kann das Gesicht 25 des Brillenträgers 20 in unterschiedlichen Aufnahmerichtungen 19 erfasst werden.

Die Vorrichtung 10 ermöglicht das Ermitteln einer Repräsentation des Rands der Brillenglaser, die in einer von dem Brillenträger 20 ausgewählten Brillenfassung 24 aufgenommen und gehalten werden sollen, um dessen Fehlsichtigkeiten zu korrigieren und nach Möglichkeit auszugleichen. Hierfür wird mittels der Bildaufnahmeeinrichtungen 14, 16, 18 ein Bilddatensatz b(x) aufgenommen, der das Gesicht 25 des Brillenträgers 20 mit der aufgesetzten Brillenfassung 24 zeigt. Um die gesuchte Repräsentation des Rands von auf die Brillenfassung 24 abgestimmten Brillengläsern zu ermitteln, kann der Bilddatensatz b(x) aufgenommen werden, ohne dass die von dem Brillenträger 20 getragene Brillenfassung 24 Brillengläser enthält. Es ist jedoch auch möglich, einen entsprechenden Bilddatensatz b(x) aufzunehmen, wenn der Brillenträger 20 eine Brillenfassung 24 trägt, in die Stützgläser oder Brillengläser montiert sind.

Die Fig. 2 zeigt ein linkes Brillenglas 28 und ein rechtes Brillenglas 29 mit dem Abschnitt einer Brillenfassung 24, die das Brillenglas 28 hält. Unter dem Rand 26 des Brillenglases 28 wird vorliegend der in der Norm DIN EN ISO 13666:2013-10 in Abschnitt 13.4 definierte Tragrand eines Brillenglases verstanden. Der Tragrand umgibt und begrenzt den Lentikularteil eines Brillenglases, d.h. denjenigen Teil, der entsprechend der Definition in Abschnitt 13.2 der Norm DIN EN ISO 13666:2013-10 die vorgeschriebene dioptrische Wirkung des Brillenglases 28, 29 hat. Der Tragrand eines Brillenglases kann bei randlosen Brillen mit der dem Brillenträger 20 abgewandten Kante der Seitenfläche 30 eines Brillenglases 28, 29, dem sogenannten Glasaußenrand zusammenfallen. Der Glasaußenrand ist in der von dem Brillenträger 20 getragenen Brillenfassung 24 teilweise verdeckt.

Als Repräsentation des Rands 26 eines auf die Brillenfassung 24 abgestimmten Brillenglases 28 ermittelt die Vorrichtung 10 als Datensatz eine in der Bildebene des Bildsensors 15 der Bildaufnahmeeinrichtung 16 liegende Punktemenge, welche die Projektion des Tragrands 26 des Brillenglases 28 in diese Bildebene beschreibt.

Die genaue Kenntnis des Verlaufs des Rands 26 eines auf eine Brillenfassung 24 abgestimmten Brillenglases 28 ermöglicht unter Berücksichtigung weiterer das Brillenglas 28 beschreibender Größen ein präzises Bestimmen der sogenannten Zentrierparameter.

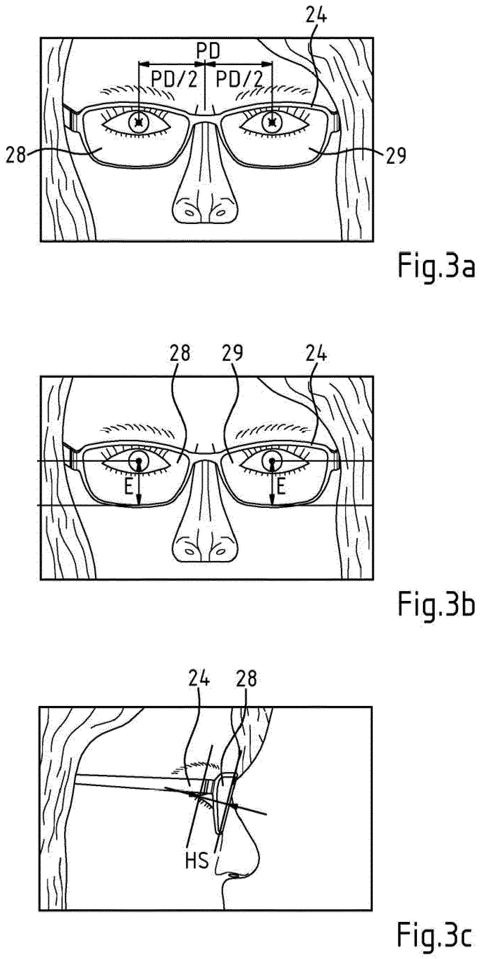

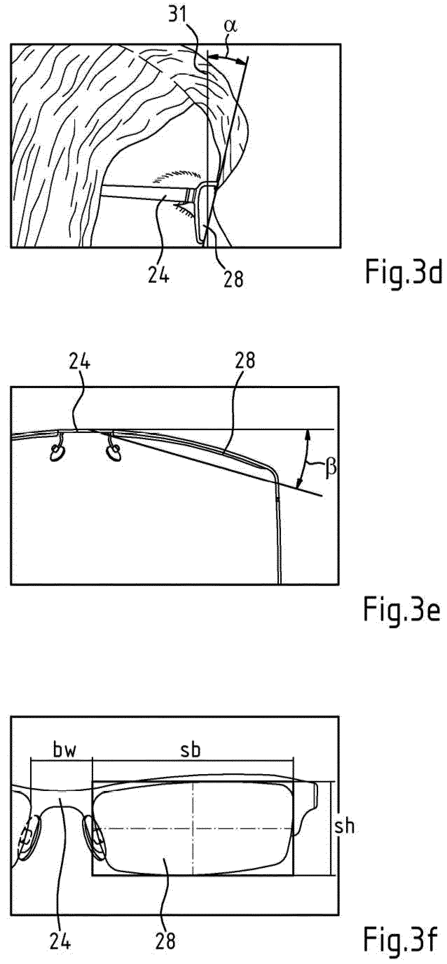

Die Fig. 3a zeigt den Zentrierparameter des Pupillenabstands PD für Brillengläser 28 in einer Brillenfassung 24, die ein Brillenträger 20 trägt. In der Fig. 3b ist als ein weiterer Zentrierparameter die Einschleifhöhe E zu sehen. Die Fig. 3c zeigt den Zentrierparameter des Hornhaut-Scheitelabstands HS. In der Fig. 3d ist als Zentrierparameter der auf die Vertikale 31 bezogene Vorneigungswinkel a zu sehen. Die Fig. 3e zeigt als Zentrierparameter den Fassungsscheibenwinkel β, d. h. den Winkel zwischen der Fassungsebene und der linken bzw. rechten Scheibenebene und die Fig. 3f die Boxmaß-Zentrierparameter, d. h. die Scheibenbreite sb, die Scheibenhöhe sh sowie den Abstand bw zwischen den Brillengläsern 28 in einer Brillenfassung 24.

Die Rechnereinheit 21 in der Vorrichtung 10 enthält ein Computerprogramm, das aus mittels der Bildaufnahmeeirichtungen 14, 16, 18 bereitgestellten Bilddaten b(x) eine Repräsentation des Rands 26 der in die Brillenfassung 24 eingepassten Brillengläser 28 ermittelt. Dieses Computerprogramm ermöglicht es, dass Merkmale wie die Pupillenmitten und Fassungsrand anhand der bereitgestellten Bilddaten b(x) automatisch detektiert und deren Position in einem zu der Brillenfassung 24 referenzierten Koordinatensystem 32 subpixelgenau bestimmt werden kann. Das Computerprogramm ermittelt dabei durch Triangulation auch zu dem Koordinatensystem 32 der Brillenfassung 24 referenzierte Positionen der Bildebenen der Bildsensoren 15 der Bildaufnahmeeinrichtungen 14, 16, 18.

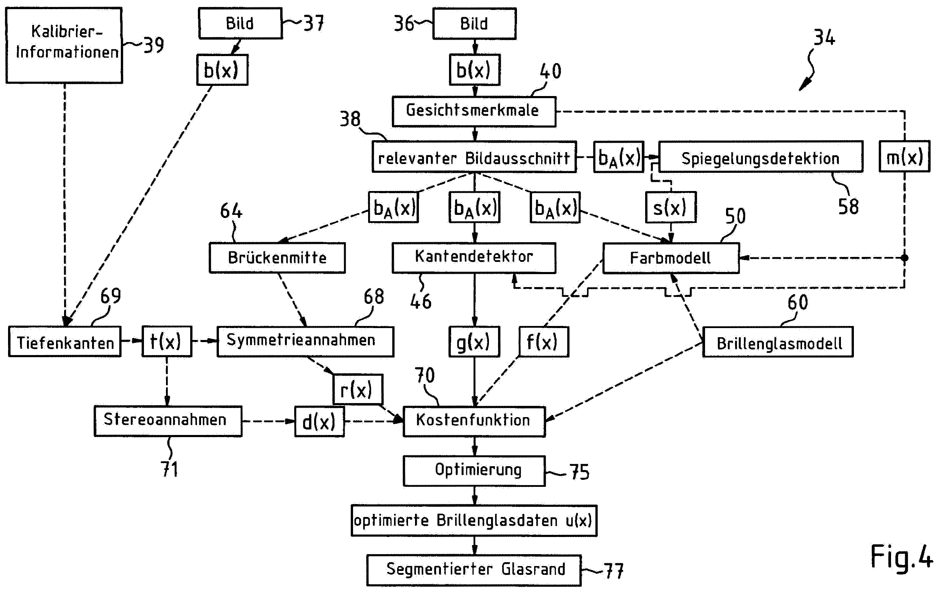

Anhand der Fig. 4 wird der in diesem für das Ermitteln der Repräsentation des Rands 26 eines Brillenglases 28 umgesetzte Algorithmus 34 nachfolgend beschrieben.

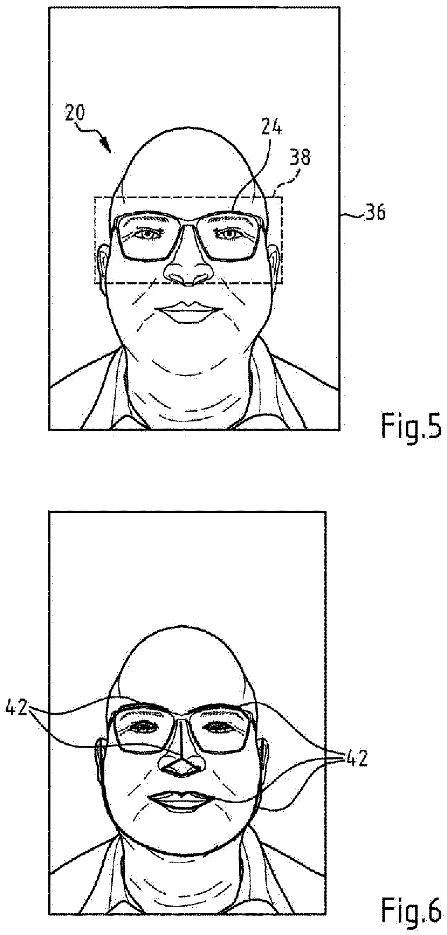

In einem ersten Schritt bestimmt der Algorithmus 34 aus von der Bildaufnahmeeinrichtung 16 bereitgestellten Bilddaten b(x) eines in der Fig. 5 gezeigten Bilds 36 des Brillenträgers 20 mit einer Brillenfassung 24, wie sie die Fig. 4 zeigt, einen relevanten Bildausschnitt 38.

Für das Bestimmen des relevanten Bildausschnitts 38 werden die Bilddaten b(x) in einer Gesichtsmerkmal-Erkennungsroutine 40 verarbeitet. Die Gesichtsmerkmal-Erkennungsroutine 40 ermittelt aus dem Bilddaten b(x) die Lage der Nasenpartie, der Augen, der Kinnpartie und der Lippenpartie durch einen Vergleich mit Datenmustern 42, die in der Fig. 6 gezeigt und für entsprechende Aufnahmen des Gesichts eines Brillenträgers 20 mit einer aufgesetzten Brillenfassung 24 charakteristisch sind.

Basierend auf einem Gesichtsmerkmal oder mehreren Gesichtsmerkmalen des Brillenträgers 20 ist es möglich, zu berechnen, in welchem Bereich üblicherweise die Kanten der Brillenfassung 24 eines von einem Brillenträger 20 getragenen Brillengestells liegen. Zu bemerken ist, dass z. B. den Augen des Brillenträgers 20 entsprechende Bildpunkte auf einem Brillenglas 28 liegende Bildpunkte sind.

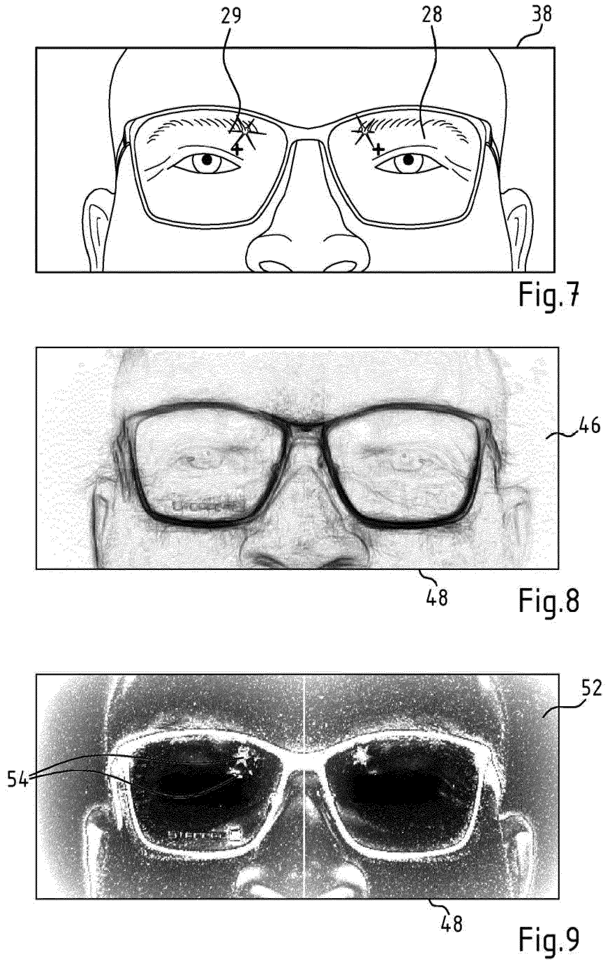

Die Fig. 7 zeigt mittels der Gesichtsmerkmal-Erkennungsroutine 40 aus den Bilddaten b(x) ermittelte Ausschnitts-Bilddaten $b_A(x)$ in dem gesuchten Bildausschnitt 38 mit der Brillenfassung 24. In dem Algorithmus 34 wird dann aus den Ausschnitts-Bilddaten $b_A(x)$ in einer Kantendetektionsroutine 44 mittels eines Kantendetektionsalgorithmus ein Kanteninformationsbild g(x) mit Kanteninformationsdaten 46 berechnet. Die Fig. 8 zeigt das Kanteninformationsbild g(x) mit Kanteninformationsdaten 46 als Bildpunkte in einem Graustufenbild 48.

In dem Algorithmus 34 wird außerdem aus den Bilddaten b(x) in einer Farbauswertungsroutine 50 mittels eines Farbauswertungsalgorithmus ein Farbinformationsbild f(x) berechnet.

Der Farbauswertungsalgorithmus f(x) dient dazu, Bildpunkte in Bildbereichen, in denen ein Brillenglas 28 liegt, von Bildpunkten zu unterscheiden, die in den der Brillenfassung 24 entsprechenden Bildbereichen liegen. Der Farbauswertungsalgorithmus benutzt hierfür ein Farbmodell, z. B. ein Hautfarbmodell, mittels dessen Bildpunkte in dem Gesicht 25 des Brillenträgers 20 von auf einem Brillengestell oder einer Brillenfassung 24 liegenden Bildpunkten getrennt werden können. Der Farbauswertungsalgorithmus enthält eine Tiefpassfilterroutine, mittels dessen die mit einer oder mehreren Bildaufnahmeeinrichtungen 14, 16, 18 erfassten Bilddaten b(x) geglättet werden, um auf diese Weise Daten zu erhalten, die einer näherungsweisen Darstellung des Gesichts 25 des Brillenträgers 20 ohne die von ihm getragene Brillenfassung 24 entsprechen. Die Daten dieser näherungsweisen Darstellung werden dann als ein Farbmodell für die innerhalb eines Brillenglases 28 liegenden Bildpunkte herangezogen. In dem Farbauswertungsalgorithmus f(x) kann z. B. auch ein Farbraumwechsel aus dem RGB-Farbraums in den YCbCr-Farbraum oder den HSV-Farbraum erfolgen, um auf diese Weise die Information der Helligkeit von Bildpunkten von der Information der Farbe von Bildpunkten zu trennen. Zu bemerken ist auch, dass der Farbauswertungsalgorithmus ermöglichen kann, dass ein geeigneter Farbraum aus einer Vielzahl von Bildern gelernt wird oder dass ein Farbraum, z. B. ein Hautfarbraum anhand von bestimmten Bildpunkten in dem mittels einer Bildaufnahmeeinrichtung 14, 16, 18 erfassten Bild eines Brillenträgers 20 etwa auf der Grundlage von Bildpunkten gelernt wird, die auf dem Nasenrücken in dem Gesicht 25 des Brillenträgers 20 liegenden Punkten entsprechen.

Die Fig. 9 zeigt im Rahmen des Farbauswertungsalgorithmus ermittelte Farbinformationsdaten 52 als Bildpunkte in einem weiteren Graustufenbild 48. Spiegelungen oder Reflexe 54, die auf den Brillengläsern 28 und/oder der Brillenfassung 24 sichtbar sind, erzeugen starke Kanten, die leicht mit dem Brillenrand verwechselt werden können. Bildpunkte zu Spiegelungen oder Reflexen haben außerdem Farben, die von der Hautfarbe des Brillenträgers 20 und von der Farbe vieler Brillengestelle bzw. Brillenfassungen 24 verschieden sind.

Um Bildpunkte in den Bilddaten b(x) zu erkennen, die einerseits auf Spiegelungen und Reflexe des Lichts an dem Brillengestell bzw. der Brillenfassung 24 zurückgehen und andererseits auf Spiegelungen und Reflexe des Lichts an den Brillengläsern 28, gibt es in dem Algorithmus 34 eine Spiegelungsdetektionsroutine 58. Die Spiegelungsdetektionsroutine 58 erkennt in den Bilddaten b(x) Bildpunkte, deren Helligkeit oberhalb eines Schwellwerts liegt und stellt diese Information in Form von Spiegelungsinformationsdaten s(x) bereit.

Alternativ oder zusätzlich ist es für das Erkennen von entsprechenden Spiegelungen und Reflexen des Lichts allerdings auch möglich, die Bilddaten b(x) in einen anderen Farbraum zu transformieren, z. B. den CMYK-Farbraum, und in diesem dann geeignete Schwellwerte für die drei Farbkanäle festzulegen, bei deren Überschreitung ein Bildpunkt als in einer Spiegelung oder einem Reflex liegender Bildpunkt qualifiziert wird. Um Bildpunkte in den Bilddaten b(x) zu erkennen, die einerseits auf Spiegelungen und Reflexe des Lichts an dem Brillengestell bzw. der Brillenfassung 24 zurückgehen, ist es außerdem möglich, die Form von Spiegelungen und Reflexen des Lichts an den Brillengläsern 28 und der Brillenfassung 24 zu bewerten. So haben z. B. Spiegelungen auf der Brillenfassung im Regelfall eine längliche Form. In der Spiegelungsroutine können für das Erkennen von Speigelungen und Reflexen aufgrund der Form deshalb auch Formfaktoren oder ein Verhältnis der Hauptachsenlängen einer in eine einer Reflexion oder Spiegelung entsprechenden Menge von Bildpunkten einbeschreibbare Ellipse benutzt werden. Zu bemerken ist, dass vorteilhafter Weise für das Erkennen von entsprechenden Spiegelungen und Reflexen des Lichts in den Bilddaten b(x) auch Distanzen von ersten Bildpunkten zu zweiten Bildpunkten bewertet werden, die Punkten entsprechen, die auf den Augen des Brillenträgers liegen.

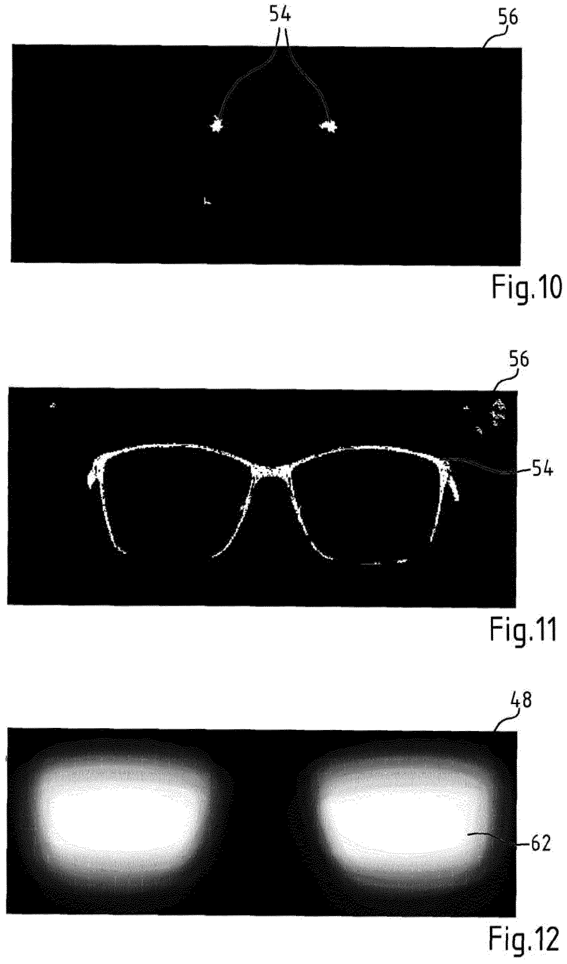

Die Fig. 10 zeigt die mittels der Spiegelungsdetektionsroutine 58 ermittelten Bildpunkte aus den Bilddaten b(x), die einem Reflex 54 bzw. einer Spiegelung auf den Brillengläsern 28 liegen in einem Schwarzweißbild 56. In der Fig. 11 sind die mittels der Spiegelungsdetektionsroutine 58 ermittelten Bildpunkte aus den Bilddaten b(x), die einem Reflex 54 bzw. einer Spiegelung auf der Brillenfassung 24 liegen, in einem Schwarzweißbild 56 gezeigt.

Um das Erkennen von Bildpunkten in den Bilddaten b(x) zu vereinfachen, die auf in einer Brillenfassung 24 eingefassten Brillengläsern 28 liegen, enthält der Algorithmus 34 eine Brillenglas-Lageroutine 60.

Die Brillenglas-Lageroutine 60 ermittelt anhand einer Vielzahl von Brillenglasinformationsdaten in Form von Brillenglasmodellen eine Wahrscheinlichkeitskarte über die Wahrscheinlichkeit, dass erfasste Bilddaten auf einem Brillenglas 28, 29 liegen. Die Fig. 12 zeigt die Wahrscheinlichkeitswerte w(x) der Wahrscheinlichkeitskarte als Wahrscheinlichkeitsinformationsdaten 62 in einem Graustufenbild 48.

Zu bemerken ist, dass alternativ hierzu auch parametrische Modelle der Form von Brillengläsern 28 geschätzt werden können, z. B. aufgrund der in den Bilddaten b(x) enthaltenen Information über die Flächen von Brillengläsern 28 oder aus in den Bilddaten b(x) enthaltener Information zu auf der Kontur von Brillengläsern 28 liegenden Bildpunkten. Dabei können dann die Parameter dieser Modelle optimiert werden.

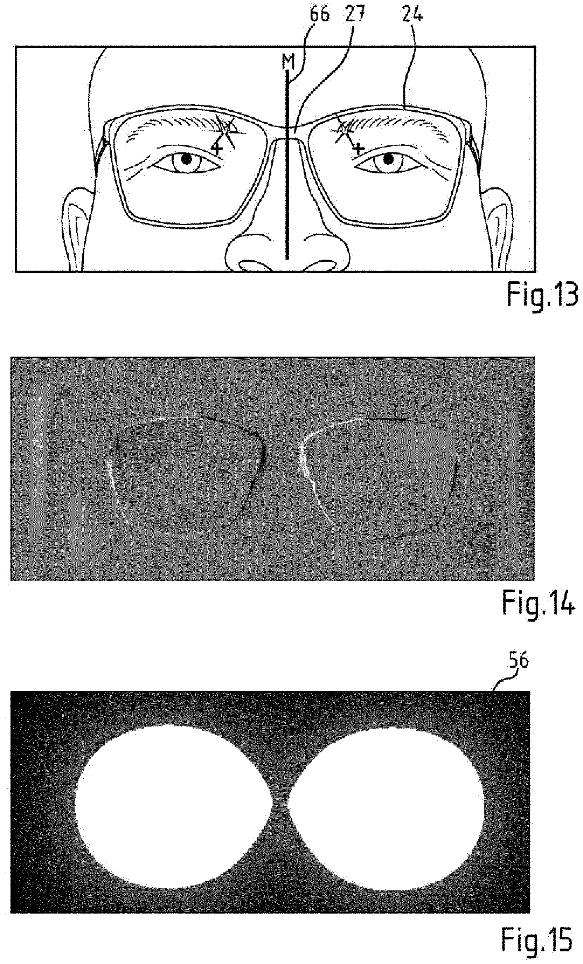

Um das Erkennen von Bildpunkten in den Bilddaten b(x) zu vereinfachen, die auf in einer Brillenfassung 24 eingefassten Brillengläsern 28 liegen, enthält der Algorithmus 34 eine Brückenmitten-Erkennungsroutine 64, die aus den Bilddaten b(x) eine Mitte M der in der Fig. 13 kenntlich gemachten Brücke 27 der Brillenfassung 24 bestimmt. Die Brückenmitten-Erkennungsroutine 64 berechnet mittels Bildverarbeitung die Mitte der Brücke 25 der Brillenfassung 24 durch Bestimmen der Mitte des Rands des linken und rechten Brillenglases 28 aus den mit einer Bilderfassungseinrichtung 14, 16, 18 erfassten Bilddaten b(x). Die Fig. 13 zeigt den mittels der Gesichtsmerkmal-Erkennungsroutine 40 aus den Bilddaten b(x) ermittelten Bilddaten in dem gesuchten Bildausschnitt 38 (Region of Interest) mit der Brillenfassung 24 und einer aus den Bilddaten b(x) bestimmten Brückenmitte 66. Zu bemerken ist, dass die Brückenmitte 66 auch z. B. mit Hilfe der Mittelpunkte zwischen detektierten Pupillenmitten, mit Hilfe der Position des Nasenrückens oder mit Hilfe einer gewichteten Kombination dieser beider Merkmale bestimmt werden kann.

Die Brückenmitten-Erkennungsroutine 64 in dem Algorithmus 34 übermittelt die Information der Brückenmitte 66 an eine Symmetrieroutine 68.

Der Algorithmus 34 weist außerdem eine Triangulationsroutine 69 auf, die aus der Information der Bilddaten b(x) eines weiteren Bild 37, das mit einer anderen Bilderfassungseinrichtung 14, 16, 18 erfasst ist anhand von in einer Kalibrierroutine 39 als Apparatekonstante bekannten Kalibrier-Informationen zu den Bilderfassungseinrichtungen 14, 16, 18 durch Triangulation in der Fig. 14 gezeigte Tiefenkarteninformationsdaten t(x) berechnen.

Unter den Kalibier-Informationen zu einer Bilderfassungseinrichtung 14, 16, 18 werden dabei extrinsische Eigenschaften wie die relative Ausrichtung der Aufnahmerichtung 19 im Raum einer Bilderfssungseinrichtung, d.h. die relative Ausrichtung der optischen Achse der Aufnahmenrichtung 19 als auch die intrinsischen Eigenschaften der Bilderfassungseinrichtung 14, 16, 18 verstanden, also die Eigenschaften der Bilderfassungseinrichtung 14, 16, 18, die definieren, wie die Koordinaten eines Punkts im Raum in einem zu der entsprechenden Bilderfassungseinrichtung 14, 16, 18 referenzierten Koordinatensystem, der in die Bildebene des Bildsensors 15 der Bilderfassungseinrichtung 14, 16, 18 abgebildet wird, in die Koordinaten des in der Bildebene des Bildsensors 15 liegenden Bildpunkts dieses Punkts überführt werden. Eine ausführliche Beschreibung der Kalibrierung von Bilderfassungseinrichtungen in Form von Kameras findet sich z.B. auf S. 8 in dem Lehrbuch "Multiple View Geometry in Computer Vision" von Richard Hartley und Andrew Zisserman, 2. Auflage, Cambridge University Press 2004, auf das hiermit Bezug genommen und dessen Offenbarung in die vorliegende Beschreibung der Erfindung mit einbezogen wird.

Die Information der Tiefenkarteninformationsdaten entspricht einer Tiefenkarte in Form einer Punktewolke, die es ermöglicht, die räumliche Ausdehnung von 3D-Brillengläsern z. B. in Form von Ebenen als Approximation an die wahre Glaskontur zu schätzen.

Die Tiefenkarteninformationsdaten t(x) werden einer Routine zu Stereoannahmen 71 zugeführt.

Der Algorithmus 34 enthält eine Kostenfunktionsroutine 70. In der Kostenfunktionsroutine 70 werden die Kanteninformationsdaten g(x) eines in der Fig. 8 als Graustufenbild 48 gezeigten Kanteninformationsbilds g(x) und die um Spiegelungen und Reflexe sowie anhand von Brillenglasmodellen korrigierten, in der Fig. 9 als ein Graufstufenbild 48 gezeigten Farbinformationsdaten f(x) sowie Symmetriebewertungsdaten r(x) und Stereobewertungsdaten d(x), welche auch die Information der Tiefenkarteninformationsdaten t(x) enthalten, mit Brillenglasdaten u(x) zu einer Kostenfunktion E(u) verknüpft. Diese Kostenfunktion E(u) wird dann in einer Optimierungsroutine 75 des Algorithmus 34 optimiert.

Die Fig. 15 ist eine Repräsentation von Brillenglasdaten u(x) als Initialdaten für eine Optimierungsroutine 75 in dem in der Fig. 4 gezeigten Algorithmus 34. Die Fig. 15 zeigt die Brillenglasdaten u(x) als ein Schwarzweißbild 56 in Form der Werte einer binären Funktion u: $\Omega \to \{0,1\}$, die innerhalb der Fläche der Brillengläser den Wert 1 und außerhalb den Wert 0 annimmt.

$$\Omega \subset \mathbb{R}2$$

ist dabei die Bildkoordinaten des Bildes, in dem die Brillengläser detektiert werden sollen. Die sogenannte distributive Ableitung dieser binären Funktion entspricht dann dem gesuchten Rand 26 eines in der Fig. 2 gezeigten Brillenglases 28.

Die in der Kostenfunktionsroutine 70 des Algorithmus 34 generierte Kostenfunktion E(u) ist nachfolgend wiedergegeben. Es gilt:

$$E(u) := E_{color}\big(u(x)\big) + E_{edge}\big(u(x)\big) + E_{sym}\big(u(x)\big)$$

mit dem Farbkostenterm

$$E_{color}\big(u(x)\big) := \int_{\Omega} u(x)f(x)\,dx\,,$$

wobei die Brillenglasdaten u(x) die räumliche Ausdehnung wenigstens eines in der Brillenfassung 24 gehaltenen Brillenglases 28 beschreiben und wobei f(x) die aus den Bilddaten b(x) ermittelten Farbinformationsdaten sind, und mit dem Kantenkostenterm

$$E_{edge}\big(u(x)\big) := \int_{\Omega} g(x)|D\,u(x)|\,,$$

wobei D der Gradient von u im distributiven Sinne ist und der Term die mit den Kanteninformationsdaten g(x) gewichtete Konturlänge der Brillengläser berechnet, die minimal ist, wenn die Brillenglasdatenkanten mit den delektierten Kanten aus den Bilddaten b(x) übereinstimmen,
und mit dem Symmetriekostenterm

$$E_{sym}\big(u(x)\big),$$

der die Symmetrie eines linken und eines rechten Brillenglases 28 bezüglich einer Mittelebene in der Brillenfassung 24 bewertet.

In dem Farbkostenterm $E_{color}(u(x))$ wird die Farbe der Bilddaten b(x) mit Brillenglasdaten u(x) korreliert und bewertet. Der Kantenkostenterm $E_{edge}(u(x))$ ist eine Korrelation von Bildkanten in den Bilddaten b(x) mit den Brillenglasdaten u(x). Der Symmetriekostenterm $E_{sym}(u(x))$ korreliert in den Bilddaten b(x) enthaltene Symmetrien mit Brillenglasdaten u(x), indem die Brillenglasdaten u(x) an der Mittelebene durch die Brückenmitte gespiegelt und Abweichungen der Brillenglasdaten u(x) von den gespiegelten Daten bewertet werden.

In dem Symmetriekostenterm $E_{sym}(u(x))$ wird eine auf den Tiefenkarteninformationsdaten t(x) beruhende 3D-Symmetrieannahme verrechnet, wonach ein linkes und ein rechtes Brillenglas in der Brillenfassung 24 zu einer 3D-Ebene symmetrisch ist, welche durch die in der Brückenmitten-Erkennungsroutine 64 bestimmte linienförmige Brückenmitte 66 und durch bekannte Kalibier-Informationen einer der Bilderfassungseinrichtungen 14, 16, 18 in der Vorrichtung 10 definiert ist.

Der ermittelten 3D-Ebene wird in dem Symmetriekostenterm $E_{sym}(u(x))$ die Funktion einer Spiegelebene zuerkannt, welche die im dreidimensionalen Raum auf einem linken und rechten Brillenglas liegende Punkte aufeinander abbildet, wobei in dem Symmetriekostenterm $E_{sym}(u(x))$ Abweichungen r(x) von Ist- zu Sollwerten dieser Abbildung bewertet werden. Der Symmetrieterm $E_{sym}(u(x))$ weist dann Brillenglasdaten u(x), die zwei Brillengläsern entsprechen, die zueinander nicht symmetrisch sind, Kostenwerte zu, die umso größer sind, je größer die in dem Algorithmus 34 als Symmetriebewertungsdaten r(x) fungierende Abweichungen der beiden Brillengläser sind. Auf diese Weise ist sichergestellt, dass die bei Optimieren der Kostenfunktion aufgefundenen Brillenglasdaten u(x) zueinander symmetrische Brillengläser beschreiben. Alternativ hierzu ist es auch möglich, in einer Zwangsbedingung vorzugeben, dass die durch das Optimieren der Kostenfunktion aufgefundenen Brillenglasdaten u(x) symmetrisch sind.

Zu bemerken ist, dass es möglich ist, in dem Symmetriekostenterm $E_{sym}(u(x))$, auch wenn keine Tiefenkareninformationsdaten vorliegen, 2D-Symmetrieannahmen zu verrechnen, z.B. indem die Brillenglasdaten u(x) eines linken Brillenglases 28 an der Brückenmittenlinie 66 in der Bildebene des Bildsensors 15 einer Bilderfassungseinrichtung 14, 16, 18 auf die Brillenglasdaten u(x) eines rechten Brillenglases 29 gespiegelt und dann wiederum Abweichungen r(x) von Istwerten zu Sollwerten berechnet werden, die in die Kostenfunktion eingehen.

Zu bemerken ist, dass es Kalibrier-Informationen zu mehreren Bilderfassungseinrichtungen auf der Grundlage von Bilddaten u(x), die mindestens zwei mittels der Bilderfassungseinrichtung erfassten Bildern entsprechen, ermöglichen, die Robustheit des Algorithmus zu erhöhen. Insbesondere ermöglichen solche Kalibrier-Informationen, dass anhand der Bilddaten b(x) zu diesen Bildern ein Innenrand der Brillenfassung bzw. ein Rand der Brillengläser gleichzeitig optimiert und Glasranddaten $u_1(x),..., u_n(x)$ für je zwei Bilder während der Optimierung aufeinander bezogen werden können. Dadurch können sich die Glasranddaten in den verschiedenen Bildern gegenseitig beeinflussen.

Um die aus zweie Bildern $u_1(x)$ und $u_2(x)$ ermittelten Glasranddaten aufeinander zu beziehen, kann in die Kostenfunktion E(u) auch ein weiterer Kostenterm eingeführt werden oder es kann für das Optimieren der Kostenfunktion eine Zwangsbedingung vorgegeben werden, die auf dem Berechnen von Stereoinformationen beruht. Solche Stereoinformationen können beinhalten, dass zu einem jeden Bildpunkt in einem mit einer ersten Bilderfassungseinrichtung erfassten Bild derjenige Bildpunkt in einem zweiten Bild aufgefunden wird, auf den der gleiche 3D-Punkt abgebildet wird. Auf der Grundlage dieser Informationen kann dann eine Zwangsbedingung oder ein Kostenterm vorgegeben werden, der eine als Stereobewertungsdaten d(x) fungierende Abweichung von Brillenglasdaten $u_1(x)$ von den zugehörigen Stereopunkten in den Brillenglasdaten $u_2(x)$ berechnet. Diese Stereobewertungsdaten d(x) können insbesondere für ein jedes Bildpaar berechnet werden.

Die Stereobewertungsdaten d(x) können auch als ein zusätzlicher Kostenterm $E_{Stereo}(u_1(x), u_2(x))$ in der Kostenfunktion E(u) berücksichtigt werden oder als eine Zwangsbedingung beim Optimieren der Kostenfunktion E(u), die sichergestellt, dass es zwischen Brillenglasdaten u(x), denen unterschiedliche Bilder zugrunde liegen, die mit einer oder mehreren Bilderfassungseinrichtungen erfasst werden, keine Unterschiede geben darf.

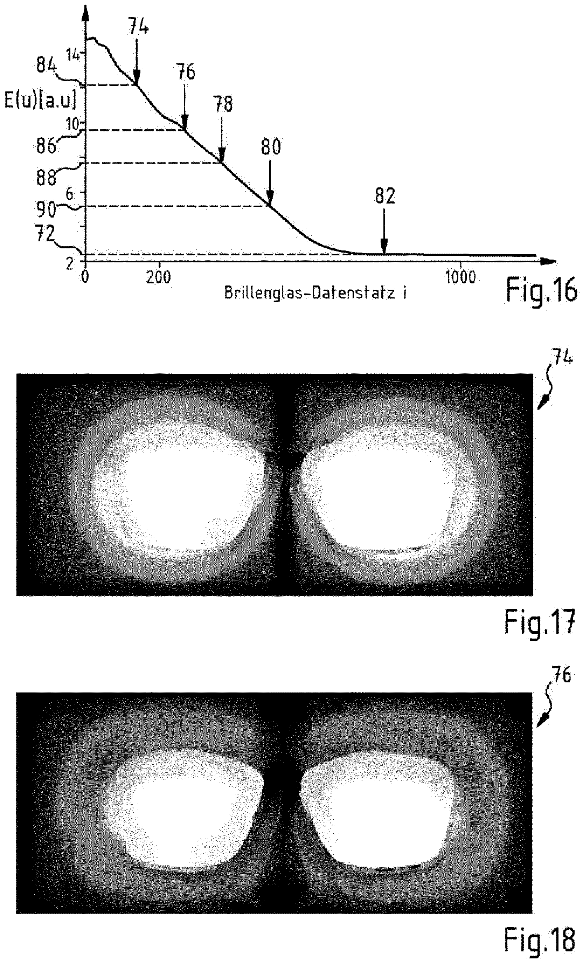

Die Fig. 16 zeigt die Werte der Kostenfunktion E(u) für unterschiedliche Zwischenergebnisse i = 0, 1, 2, 3, ... der Optimierungsroutine für Brillenglas-Datensätze mit Brillenglasdaten u(x). Mittels Variieren der Brillenglasdaten u(x) kann die Kostenfunktion E(u) auf ein Minimum 72 optimiert werden. Diese Maßnahme ermöglicht dann das Auffinden derjenigen Brillenglasdaten u(x), die den Rand eines an die von dem Brillenträger 20 getragene Brillenfassung 24 angepassten Brillenglases 28 präzise beschreiben.

Der Algorithmus 34 enthält eine Optimierungsroutine 75, die zu der Kostenfunktion der Kostenfunktionsroutine 70 diejenigen Brillendaten u(x) bestimmt, zu denen die Kostenfunktion E(u) minimal ist.

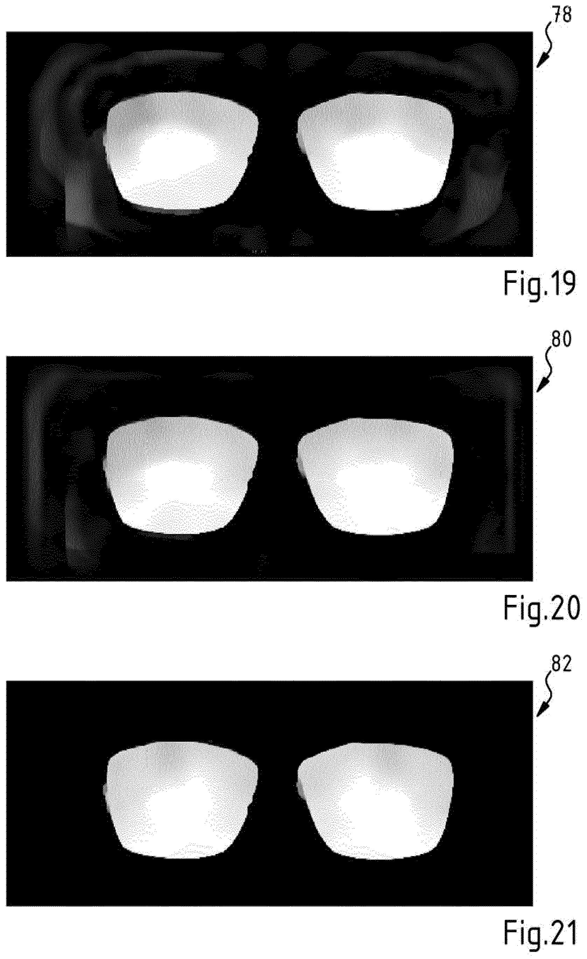

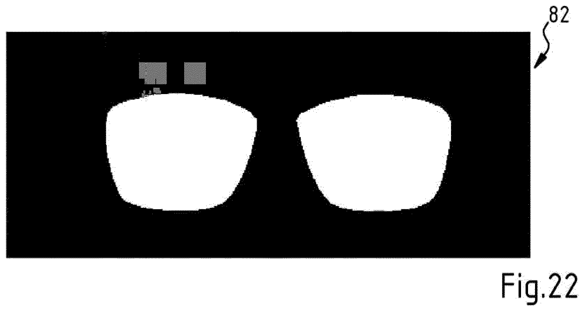

Die Fig. 17 bis Fig. 22 zeigen als Schwarzweißbilder 56 Repräsentationen 74, 76, 78, 80 und 82 zu unterschiedlichen Brillenglas-Datensätzen i, i=74, i=76, i=78, i=80 und i=82 betreffend Brillenglasdaten u(x), die den in der Fig. 15 kenntlich gemachten Werten 84, 86, 88, 90 und dem Minimum 72 der Kostenfunktion E(u) entsprechen. Die in der Fig. 15 repräsentierten Brillenglasdaten u(x) sind ein Initialdatensatz, anhand dessen die Kostenfunktion E(u) optimiert wird. Die in der Fig. 22 repräsentierten Brillenglasdaten u(x) sind die durch das Optimieren der Kostenfunktion E(u) aufgefundenen. Sie enthalten in Form des Rands der beiden Flächen 94, 96 die Information des gesuchten Rands von Brillengläsern 28, die für das Einfassen in die von dem in der Fig. 1 gezeigten Brillenträger 20 getragenen Brillenfassung 24 geeignet sind. In dem Algorithmus 34 wird der gesuchte Rand eines Brillenglases 28 aus dem durch Optimieren der Kostenfunktion E(u) aufgefundenen Brillenglasdaten u(x) in einer Randberechnungsroutine 77 bestimmt. Diese Randberechnungsroutine 77 kann auch vorsehen, dass aus dem gesuchten Tragrand eines Brillenglases ein Glasaußenrand berechnet wird, z.B. indem vorgegeben wird, dass der Glasaußenrand einen festen Abstand von dem ermittelten Tragrand des entsprechenden Brillenglases 28 hat.

Die Kostenfunktion E(u) ist damit eine Summe von Energietermen und unterliegt Zwangsbedingungen. An die Brillenglasdaten werden 2D und/oder 3D-Symmetrie-Bedingungen gestellt. Das Optimieren der Kostenfunktion u(x) erfolgt nur innerhalb der in dem relevanten Bildausschnitt 38 liegenden Bilddaten b(x).

Zu bemerken ist, dass es möglich ist, die Energieterme in der Kostenfunktion E(u) zu gewichten. Insbesondere ist es möglich, einzelne Energieterme in der Kostenfunktion E(u) mit dem Faktor 0 zu gewichten, d.h. einzelne Energieterme in der Kostenfunktion E(u) wegzulassen und somit nicht zu berücksichtigen. Außerdem ist es möglich, die Länge des Rands der Brillengläser 28 insbesondere über die erste Ableitung dieser Kurve zu minimieren. Es ist auch möglich, Abweichungen von dem Farbmodell unter Berücksichtigung eines Glasmodells und der bei dem Erfassen von Spiegelungen und/oder Reflexionen generierten Informationen zu bestrafen. Schließlich ist zu bemerken, dass die in dem Algorithmus 34 berücksichtigten, aus Glasebenen ermittelten 2D- und 3D-Symmetriebedingungen auf 3D-Informationen beruhen können, die auch das Ermitteln von Zentrierparametern ermöglichen.

Grundsätzlich kann die Kostenfunktion E(u) auf unterschiedliche Art minimiert werden. Es ist insbesondere möglich, die Kostenfunktion E(u) z. B. über kontinuierliche Methoden (primal-dual-Ansätze), diskrete Graph-Cut Methoden, Active Contour Modelle oder ähnliches zu minimieren.

Kontinuierliche Methoden sind dadurch definiert, dass sie das Bild als kontinuierliche Funktion beschreiben und dadurch die Kostenfunktion auf einem kontinuierlichen mathematischen Raum definiert ist. Die Diskretisierung der Kostenfunktion auf Basis von Bildpunkten erfolgt dann erst in einem letzten Schritt vor der Optimierung. Im Gegensatz dazu definieren diskrete Optimierungsmethoden die Optimierungsfunktion direkt auf Pixelebene.

Zu bemerken ist auch, dass, wie in der Puplikation C. Niewenhuis et. al. Spatially Varying Color Distributions for Interactive Multilabel Segmentation, IEEE Transactions on Pattern Analysis and Machine Intelligence, 35, 1 (2013) beschrieben ist, kontinuierliche Methoden gegenüber diskreten den Vorteil haben, dass sie Artefakte an Kanten vermeiden und sehr viel leichter parallelisierbar sind. Das Parallelisieren ermöglicht insbesondere schnelle Berechnungen auf einer Graphikkarte eines Computers.

Zu bemerken ist in diesem Zusammenhang insbesondere, dass die in dem Algorithmus 34 berücksichtigten, aus Glasebenen ermittelten 2D- und 3D-Symmetriebedingungen auf 3D-Informationen beruhen, die auch das Ermitteln von Zentrierparametern ermöglichen.

Zu bemerken ist darüber hinaus, dass die vorstehend beschriebenen Modelle der Form von Brillengläsern 28 auch als eine Zwangs- bzw. Nebenbedingung bei dem Optimieren der Kostenfunktion E(u) herangezogen werden können. Eine solche Zwangs- bzw. Nebenbedingung kann z. B. sein, dass der ermittelte finale Rand eines Brillenglases 28 innerhalb des zuvor gelernten Modellraumes liegt. Es versteht sich, dass statt Modelle aus Beispielen zu lernen diese auch definiert werden können.

Der vorstehend beschriebene Algorithmus 34 kann grundsätzlich auch durchgeführt werden, ohne dass eine oder mehrere Routinen der vorstehend beschriebenen Routinen aus der Gruppe Gesichtsmerkmal-Erkennungsroutine 40, Spiegelungsdetektionsroutine 58, Brillenglas-Lageroutine 60, Brückenmitten-Erkennungsroutine 64 oder Triangulationsroutine 69 durchgeführt werden. Auch kann der vorstehend beschriebene Algorithmus 34 durchgeführt werden, ohne dass die zu optimierende Kostenfunktion E(u) einen Symmetriekostenterm $E_{sym}(u(x))$ enthält oder unter Berücksichtigung einer Symmetrie-Zwangsbedingung optimiert wird. Die zu optimierende Kostenfunktion E(u) muss auch nicht zwingend gleichzeitig einen Farbkostenterm $E_{color}(u(x))$ und einen Kantenkostenterm $E_{edge}(u(x))$ enthalten.

Insbesondere kann der Algorithmus 34 auch mit Bilddaten b(x) durchgeführt werden, welche die Information lediglich eines mit einer einzigen Bildaufnahmeeinrichtung 16 erfassten Bilds des in der Fig.1 gezeigten Brillenträgers 20 enthalten. Im Rahmen der Erfindung müssen als nicht zwingend Bilddaten b(x) bereitgestellt werden, die auf mit unterschiedlichen Bilderfassungseinrichtungen 14, 16, 18 aus unterschiedlichen Aufnahmerichtungen erfassten Bilddaten b(x) zu dem Gesicht 25 des Brillenträgers 20 mit einer von diesem getragenen Brillenfassung 24 beruhen.

Zusammenfassend sind folgende bevorzugte Merkmale der Erfindung festzuhalten: Die Erfindung betrifft ein Verfahren zum Ermitteln der Repräsentation des Rands 26 eines Brillenglases 28 oder eines linken Brillenglases 28 und eines rechten Brillenglases 29 für einen Brillenträger 20. Erfindungsgemäß werden hierfür folgende Schritte durchgeführt:

Bereitstellen von Bilddaten b(x) zu dem Brillenträger 20 mit einer getragenen Brillenfassung 24,

Berechnen von aus den Bilddaten b(x) abgeleiteten Informationsdaten I(x), Berechnen einer die Informationsdaten I(x) mit Brillenglasdaten u(x) verknüpfenden Kostenfunktion E(u), wobei die Brillenglasdaten u(x) die räumliche Ausdehnung wenigstens eines in der Brillenfassung 24 gehaltenen Brillenglases 28 beschreiben, und

Festlegen eines Verlaufs eines Rands 26 des Brillenglases 28 oder des linken Brillenglases und des rechten Brillenglases 29 durch Optimieren der Kostenfunktion E(u).

## Bezugszeichenliste

| 10 | Vorrichtung |
|---|---|
| 12 | Säule |
| 14, 16, 18 | Bildaufnahmeeinrichtung |
| 15 | Bildsensor |
| 19 | Aufnahmerichtung |
| 20 | Brillenträger |
| 21 | Rechnereinheit |
| 22 | Eingabeschnittstelle |
| 23 | Ausgabeschnittstelle |
| 24 | Brillenfassung |
| 25 | Brücke der Brillenfassung |
| 26 | Rand |
| 28 | linkes Brillenglas |
| 29 | rechtes Brillenglas |
| 30 | Seitenfläche |
| 31 | Vertikale |
| 32 | Koordinatensystem |

| | |
|---|---|
| 34 | Algorithmus |
| 36 | Bild |
| 37 | weiteres Bild |
| 38 | Bildausschnitt |
| 39 | Kalibrierroutine |
| 40 | Gesichtsmerkmal-Erkennungsroutine |
| 42 | Datenmuster |
| 44 | Kantendetektionsroutine |
| 46 | Kanteninformationsdatend |
| 48 | Graustufenbild |
| 50 | Farbauswertungsroutine |
| 52 | Farbinformationsdaten |
| 54 | Spiegelungen/Reflexe |
| 56 | Schwarzweißbild |
| 58 | Spiegelungsdetektionsroutine |
| 60 | Brillenglas-Lageroutine |
| 62 | Wahrscheinlichkeitsinformationsdaten |
| 64 | Brückenmitten-Erkennungsroutine |
| 66 | Brückenmitte |
| 68 | Symmetrieroutine |
| 69 | Triangulationsroutine |
| 70 | Kostenfunktionsroutine |
| 71 | Stereoannahme |
| 72 | Minimum |
| 74 | Repräsentation |
| 75 | Optimierungsroutine |
| 77 | Randberechnungsroutine |
| 76, 78, 80, 82 | Repräsentationen von Brillenglas-Datensätzen über Brillenglasdaten u(x) |
| 84, 86, 88, 90, 92 | Werte der Kostenfunktionswerte E(u) |
| 94, 96 | Fläche |

| | |
|---|---|
| A | Aufnahmeabstand |
| bw | Abstand Brillengläser |
| b(x) | Bilddatensatz / Bilddaten |
| E | Einschleifhöhe |
| E(u) | Kostenfunktion |
| f(x) | Farbinformationsdaten |
| g(x) | Kanteninformationsdaten |
| HS | Hornhaut-Scheitelabstand |
| sb | Scheibenbreite |
| sh | Scheibenhöhe |
| d(x) | Stereobewertungsdaten |
| di(x) | Brillenglasforminformationsdaten |
| r(x) | Symmetriebewertungsdaten |
| s(x) | Spiegelungsinformationsdaten |
| t(x) | Tiefenkarteninformationsdaten |
| u(x) | Brillenglasdaten |
| w(x) | Wahrscheinlichkeitswerte |
| $\alpha$ | Vorneigungswinkel |
| $\beta$ | Fassungsscheibenwinkel |

**Patentansprüche**

1. Computerimplementiertes Verfahren zum Ermitteln der Repräsentation des Rands (26) eines Brillenglases (28) oder eines linken Brillenglases (28) und eines rechten Brillenglases (29) für einen Brillenträger (20)

umfassend das

Bereitstellen eines Bildes (36) des Brillenträgers (20) mit Bilddaten b(x) zu dem Brillenträger (20) mit einer getragenen Brillenfassung (24), und

das Berechnen von aus den Bilddaten b(x) abgeleiteten Informationsdaten I(x),

und umfassend folgende Schritte:

Bestimmen eines Bildausschnitts (38) des Bildes (36) des Brillenträgers (20) aus dessen Gesichtsmerkmalen,

wobei die Informationsdaten I(x) aus Ausschnitts-Bilddaten $b_A(x)$ des Bildausschnitts (38) berechnete Kanteninformationsdaten (46) sind;

Berechnen einer die Informationsdaten I(x) mit Brillenglasdaten u(x) verknüpfenden Kostenfunktion E(u), wobei die Brillenglasdaten u(x) die räumliche Ausdehnung wenigstens eines in der Brillenfassung (24) gehaltenen Brillenglases (28) als binäre Funktion $u: \Omega \to \{0,1\}$ und $\Omega \subset \mathbb{R}^2$ die Bildkoordinaten beschreiben, wobei die binäre Funktion $u: \Omega \to \{0,1\}$ innerhalb der Fläche des Brillenglases den Wert 1 und außerhalb den Wert 0 annimmt, wobei die distributive Ableitung der binären Funktion $u: \Omega \to \{0,1\}$ und $\Omega \subset \mathbb{R}^2$ dem Rand (26) des Brillenglases (28) entspricht, und wobei die Bildkoordinaten die Bildkoordinaten des Bildausschnitts (38) des Bildes (36) des Brillenträgers (20) mit der Brillenfassung (24) sind, und Festlegen eines Verlaufs eines Rands (26) des Brillenglases (28) oder des linken Brillenglases (28) und des rechten Brillenglases (29) durch Optimieren der Kostenfunktion E(u).

2. Verfahren nach Anspruch 1, **dadurch gekennzeichnet, dass** die aus den Bilddaten b(x) abgeleiteten berechneten Informationsdaten I(x) ein aus den erfassten Bilddaten b(x) mittels eines Kantendetektionsalgorithmus ermitteltes Kanteninformationsbild g(x) umfassen.

3. Verfahren nach Anspruch 2, **dadurch gekennzeichnet, dass** der Kantendetektionsalgorithmus einen Kantendetektor aus der Gruppe Gradient, Farbgradient, Canny-Edge-Detektor, gerichtetes Filter, insbesondere Solbelfilter enthält oder dass der Kantendetektionsalgorithmus für die Kantendetektion auf eine Filterbank mit gelernten Kantendetektoren zugreift oder dass der Kantendetektionsalgorithmus als ein mit Verfahren des maschinellen Lernens selbstlernender Algorithmus ausgebildet ist.

4. Verfahren nach Anspruch 1, **dadurch gekennzeichnet, dass** die aus den Bilddaten b(x) abgeleiteten berechneten Informationsdaten I(x) ein aus den erfassten Bilddaten b(x) mittels eines die Farbe von Bilddaten b(x) auswertenden Farbauswertungsalgorithmus ermitteltes Farbinformationsbild f(x) umfassen.

5. Verfahren nach einem der Ansprüche 2 oder 3, **dadurch gekennzeichnet, dass** die aus den Bilddaten b(x) abgeleiteten berechneten Informationsdaten I(x) ein aus den erfassten Bilddaten b(x) mittels eines die Farbe von Bilddaten auswertenden Farbauswertungsalgorithmus ermitteltes Farbinformationsbild f(x) umfassen.

6. Verfahren nach Anspruch 4 oder 5, **dadurch gekennzeichnet, dass** die Kostenfunktion E(u) eine gewichtete Summe eines Kantendetektionskostenterms $E_g(u)$ und eines Farbauswertungskostenterms $E_f(u)$ ist.

7. Verfahren nach Anspruch 6, **dadurch gekennzeichnet, dass** das Berechnen von aus den Bilddaten abgeleiteten Informationsdaten I(x) das Ermitteln von Spiegelungsinformationsdaten s(x) mit einem Algorithmus für das Erkennen von Spiegelungen an der Brillenfassung und/oder eines in der Brillenfassung aufgenommenen Brillenglases umfasst.

8. Verfahren nach Anspruch 7, **dadurch gekennzeichnet, dass** der Farbauswertungsalgorithmus und/oder der Kantendetektionsalgorithmus die aus den Bilddaten b(x) berechneten Spiegelungsinformationsdaten s(x) berücksichtigt.

9. Verfahren nach einem der Ansprüche 6 bis 8, **dadurch gekennzeichnet, dass** das Berechnen von aus den Bilddaten b(x) abgeleiteten Informationsdaten I(x) das Ermitteln von Gesichtsmerkmalsinformationsdaten m(x) mit einem Algorithmus für das Erkennen von Gesichtsmerkmalen umfasst, insbesondere einen Algorithmus für das Erkennen von Gesichtsmerkmalen, der für das Erkennen eines oder mehrerer Gesichtsmerkmale aus der Gruppe Auge, Pupille. Augenbraue, Nase oder Mund ausgelegt ist.

10. Verfahren nach Anspruch 8 oder 9, **dadurch gekennzeichnet, dass** der Farbauswertungsalgorithmus und/oder der Kantendetektionsalgorithmus die aus den Bilddaten b(x) berechneten Gesichtsmerkmalsinformationsdaten m(x) berücksichtigt.

**11.** Verfahren nach einem der Ansprüche 1 bis 9, **dadurch gekennzeichnet, dass** die Kostenfunktion E(u) für das Ermitteln des Rands eines linken Brillenglases (28) und eines rechten Brillenglases (29) für einen Brillenträger (20) eine Symmetrie von Brillenglasdaten u(x) bewertet und/oder dass die Kostenfunktion E(u) für das Ermitteln des Rands (26) eines linken Brillenglases (28) und eines rechten Brillenglases (29) für einen Brillenträger (20) mit einer Stereobedingung aufeinander abgebildete Punkte in Brillenglasdaten u(x) zu Bildern bewertet, die unterschiedlichen Aufnahmerichtungen (19) der Bilderfassungseinrichtungen (14, 16, 18) entsprechen.

**12.** Verfahren nach einem der Ansprüche 6 bis 10, **dadurch gekennzeichnet, dass** das Berechnen von aus den Bilddaten b(x) abgeleiteten Informationsdaten I(x) das Ermitteln von Brillenglasforminformationsdaten di(x) mit einem Algorithmus umfasst, der anhand eines dem Algorithmus zugeführten Brillenglasmodells oder anhand einer Vielzahl von dem Algorithmus zugeführten Brillenglasmodellen als Brillenglasforminformationsdaten di(x) ein parametrisches Modell oder eine Wahrscheinlichkeiten repräsentierende Karte über die Wahrscheinlichkeit angibt, dass erfasste Bilddaten b(x) auf einem Brillenglas (28, 29) liegen,

und/oder
dass das Berechnen von aus den Bilddaten b(x) abgeleiteten Informationsdaten I(x) das Ermitteln von Brillenglasforminformationsdaten di(x) mit einem Algorithmus (34) umfasst, der anhand eines dem Algorithmus zugeführten Brillenglasmodells oder anhand einer Vielzahl von dem Algorithmus zugeführten Brillenglasmodellen als Brillenglasforminformationsdaten di(x) eine 2D-Form oder eine 3D-Form eines in der Brillenfassung (24) aufnehmbaren Brillenglases (28, 29) angibt,
und/oder
dass der Farbauswertungsalgorithmus die aus den Bilddaten b(x) berechneten Brillenglasforminformationsdaten di(x) berücksichtigt.

**13.** Verfahren nach einem der Ansprüche 1 bis 12, **dadurch gekennzeichnet, dass** die aus den Bilddaten b(x) abgeleiteten berechneten Informationsdaten I(x) eine mittels eines Brückenmittendetektionsalgorithmus ermittelte Brückenmitte M umfassen,
und/oder
dass den bereitgestellten Bilddaten b(x) zu dem Brillenträger (20) aus wenigstens zwei unterschiedlichen Blickwinkeln aufgenommene Bilder zugrunde liegen.

**14.** Computerprogramm umfassend Programmcode, welcher, wenn in einem Computersystem geladen und ausgeführt, zur Durchführung eines Verfahrens nach einem der vorangegangenen Ansprüche ausgelegt ist.

**15.** Vorrichtung zum automatischen Ermitteln des Verlaufs des Rands eines Brillenglases (28) oder eines linken Brillenglases (28) und eines rechten Brillenglases 29) für einen Brillenträger 20,

umfassend
wenigstens eine Bilderfassungseinrichtung (14, 16, 18) zum Bereitstellen eines Bilds (36) des Brillenträgers (20) mit Bilddaten b(x) zu dem Brillenträger (20) mit einer getragenen Brillenfassung (24),
Mittel zum Bestimmen eines Bildausschnitts (38) des Bildes (36) des Brillenträgers (20) aus dessen Gesichtsmerkmalen;
Mittel zum Berechnen von aus den Bilddaten b(x) abgeleiteten Informationsdaten I(x), wobei die Informationsdaten I(x) aus Ausschnitts-Bilddaten $b_A(x)$ des Bildausschnitts (38) berechnete Kanteninformationsdaten (46) sind;
Mittel zum Berechnen einer die Informationsdaten I(x) mit Brillenglasdaten u(x) verknüpfenden Kostenfunktion E(u), wobei die Brillenglasdaten u(x) die räumliche Ausdehnung wenigstens eines in der Brillenfassung (24) gehaltenen Brillenglases (28) als binäre Funktion $u: \Omega \rightarrow \{0,1\}$ und $\Omega \subset \mathbb{R}^2$ die Bildkoordinaten beschreiben, wobei die binäre Funktion $u: \Omega \rightarrow \{0,1\}$ innerhalb der Fläche des Brillenglases den Wert 1 und außerhalb den Wert 0 annimmt, wobei die distributive Ableitung der binären Funktion $u: \Omega \rightarrow \{0,1\}$ und $\Omega \subset \mathbb{R}^2$ dem Rand (26) des Brillenglases (28) entspricht, und wobei die Bildkoordinaten die Bildkoordinaten des Bildausschnitts (38) des Bildes (36) des Brillenträgers (20) mit der Brillenfassung (24) sind, und
Mittel zum Festlegen eines Verlaufs eines Rands (26) des Brillenglases (28) oder des linken Brillenglases (28) und des rechten Brillenglases (29) durch Optimieren der Kostenfunktion E(u).

**Claims**

1. Computer-implemented method for establishing the representation of the edge (26) of a spectacle lens (28) or of a left spectacle lens (28) and a right spectacle lens (29) for a spectacle wearer (20),

   comprising
   the provision of an image (36) of the spectacle wearer (20) with image data b(x) relating to the spectacle wearer (20) with a worn spectacle frame (24), and
   the calculation of information data I(x) derived from the image data b(x),
   and comprising the following steps:

   determining an image section (38) of the image (36) of the spectacle wearer (20) from their facial features, wherein the information data I(x) are edge information data (46) calculated from the section image data $b_A(x)$ of the image section (38);
   calculating a cost function E(u) linking the information data I(x) with spectacle lens data u(x), wherein the spectacle lens data u(x) describe the spatial extent of at least one spectacle lens (28) held in the spectacle frame (24) as a binary function $u: \Omega \to \{0,1\}$, where $\Omega \subset \mathbb{R}^2$ describes the image coordinates, wherein the binary function $u: \Omega \to \{0,1\}$ adopts a value of 1 within the area of the spectacle lens and adopts a value of 0 outside,

   wherein the distributional derivative of the binary function $u: \Omega \to \{0,1\}$ and $\Omega \subset \mathbb{R}^2$ corresponds to the edge (26) of the spectacle lens (28) and wherein the image coordinates are the image coordinates of the image section (38) of the image (36) of the spectacle wearer (20) with the spectacle frame (24), and
   setting a curve of an edge (26) of the spectacle lens (28) or of the left spectacle lens (28) and the right spectacle lens (29) by optimizing the cost function E(u).

2. Method according to Claim 1, **characterized in that** the calculated information data I(x) derived from the image data b(x) comprise an edge information image g(x) that is established from the captured image data b(x) by means of an edge detection algorithm.

3. Method according to Claim 2, **characterized in that** the edge detection algorithm contains an edge detector from the group of gradient, colour gradient, Canny edge detector, directed filter, in particular Sobel filter, or **in that** the edge detection algorithm accesses a filter bank with learnt edge detectors for the purposes of edge detection or **in that** the edge detection algorithm is embodied as a self-learning algorithm using methods of machine learning.

4. Method according to Claim 1, **characterized in that** the calculated information data I(x) derived from the image data b(x) comprise a colour information image f(x) that is established from the captured image data b(x) by means of a colour evaluation algorithm that evaluates the colour of image data b(x).

5. Method according to either of Claims 2 and 3, **characterized in that** the calculated information data I(x) derived from the image data b(x) comprise a colour information image f(x) that is established from the captured image data b(x) by means of a colour evaluation algorithm that evaluates the colour of image data.

6. Method according to Claim 4 or 5, **characterized in that** the cost function E(u) is a weighted sum of an edge detection cost term $E_g(u)$ and a colour evaluation cost term $E_f(u)$.

7. Method according to Claim 6, **characterized in that** calculating information data I(x) derived from the image data comprises establishing mirroring information data s(x) using an algorithm for identifying mirroring at the spectacle frame and/or of a spectacle lens received in the spectacle frame.

8. Method according to Claim 7, **characterized in that** the colour evaluation algorithm and/or the edge detection algorithm take account of the mirroring information data s(x) calculated from the image data b(x).

9. Method according to any one of Claims 6 to 8, **characterized in that** calculating information data I(x) derived from the image data b(x) comprises establishing facial feature information data m(x) using an algorithm for identifying facial features, in particular an algorithm for identifying facial features that is designed to identify one or more facial features from the group of eye, pupil, eyebrow, nose and mouth.

10. Method according to Claim 8 or 9, **characterized in that** the colour evaluation algorithm and/or the edge detection algorithm take(s) account of the facial feature information data m(x) calculated from the image data b(x).

11. Method according to any one of Claims 1 to 9, **characterized in that** the cost function E(u) for establishing the edge of a left spectacle lens (28) and a right spectacle lens (29) for a spectacle wearer (20) evaluates a symmetry of spectacle lens data u(x) and/or **in that** the cost function E(u) for establishing the edge (26) of a left spectacle lens (28) and a right spectacle lens (29) for a spectacle wearer (20) evaluates points in spectacle lens data u(x), imaged onto one another with a stereo condition, to form images that correspond to different recording directions (19) of the image capture devices (14, 16, 18).

12. Method according to any one of Claims 6 to 10, **characterized in that** calculating information data I(x) derived from the image data b(x) comprises establishing spectacle lens form information data di(x) using an algorithm that, on the basis of a spectacle lens model supplied to the algorithm or on the basis of a multiplicity of spectacle lens models supplied to the algorithm as spectacle lens form information data di(x), specifies a parametric model or a map representing probabilities about the probability that captured image data b(x) lie on a spectacle lens (28, 29),

and/or
**in that** calculating information data I(x) derived from the image data b(x) comprises establishing spectacle lens form information data di(x) using an algorithm (34) that, on the basis of a spectacle lens model supplied to the algorithm or on the basis of a multiplicity of spectacle lens models supplied to the algorithm, specifies a 2D form or a 3D form of a spectacle lens (28, 29) that is receivable in the spectacle frame (24) as spectacle lens form information data di(x),
and/or
**in that** the colour evaluation algorithm takes account of the spectacle lens form information data di(x) calculated from the image data b(x).

13. Method according to any one of Claims 1 to 12, **characterized in that** the calculated information data I(x) derived from the image data b(x) comprise a bridge centre M established by means of a bridge centre detection algorithm, and/or
**in that** images recorded from at least two different directions of view form the basis of the provided image data b(x) in relation to the spectacle wearer (20).

14. Computer program, comprising program code that, when loaded into, and executed on, a computer system, is designed to carry out a method according to any one of the preceding claims.

15. Apparatus for automatically establishing the curve of the edge of a spectacle lens (28) or of a left spectacle lens (28) and a right spectacle lens (29) for a spectacle wearer (20),

comprising
at least one image capture device (14, 16, 18) for providing an image (36) of the spectacle wearer (20) with image data b(x) relating to the spectacle wearer (20) with a worn spectacle frame (24),
means for determining an image section (38) of the image (36) of the spectacle wearer (20) from their facial features;
means for calculating information data I(x) derived from the image data b(x), wherein the information data I(x) are edge information data (46) that are calculated from section image data $b_A(x)$ of the image section (38);
means for calculating a cost function E(u) linking the information data I(x) with spectacle lens data u(x), wherein the spectacle lens data u(x) describe the spatial extent of at least one spectacle lens (28) held in the spectacle frame (24) as a binary function $u: \Omega \to \{0,1\}$, where $\Omega \subset \mathbb{R}^2$ describes the image coordinates, wherein the binary function $u: \Omega \to \{0,1\}$ adopts a value of 1 within the area of the spectacle lens and adopts a value of 0 outside, wherein the distributional derivative of the binary function $u: \Omega \to \{0,1\}$ and $\Omega \subset \mathbb{R}^2$ corresponds to the edge (26) of the spectacle lens (28) and wherein the image coordinates are the image coordinates of the image section (38) of the image (36) of the spectacle wearer (20) with the spectacle frame (24), and
means for setting a curve of an edge (26) of the spectacle lens (28) or of the left spectacle lens (28) and the right spectacle lens (29) by optimizing the cost function E (u).

**Revendications**

1. Procédé mis en œuvre par ordinateur pour déterminer la représentation du bord (26) d'un verre de lunette (28) ou d'un verre de lunette gauche (28) et d'un verre de lunette droit (29) pour un porteur de lunettes (20),

   comprenant
   la fourniture d'une image (36) du porteur de lunettes (20) avec des données d'image b(x) à propos du porteur de lunettes (20) qui porte une monture de lunettes (24) et
   le calcul de données d'information I(x) dérivées des données d'image b(x),
   et comprenant les étapes suivantes :

   détermination d'un cadrage d'image (38) de l'image (36) du porteur de lunettes (20) à partir de ses caractéristiques faciales,
   les données d'information I(x) étant des données d'information d'arête (46) calculées à partir de données de cadrage d'image $b_A(x)$ du cadrage d'image (38) ;
   calcul d'une fonction de coût E(u) qui lie les données d'information I(x) à des données de verre de lunette u(x), les données de verre de lunette u(x) décrivant l'étendue dans l'espace d'au moins un verre de lunette (28) maintenu dans la monture de lunettes (24) sous la forme d'une fonction binaire $u : \Omega \rightarrow \{0,1\}$ et $\Omega \subset \Re^2$ décrivant les coordonnées d'image, la fonction binaire $u : \Omega \rightarrow \{0,1\}$ prenant la valeur 1 à l'intérieur de la surface du verre de lunettes et la valeur 0 à l'extérieur de la surface du verre de lunettes, la dérivation distributive de la fonction binaire $u : \Omega \rightarrow \{0,1\}$ et $\Omega \subset \Re^2$ correspondant au bord (26) du verre de lunettes (28), et les coordonnées d'image étant les coordonnées d'image du cadrage d'image (38) de l'image (36) du porteur de lunettes (20) qui porte une monture de lunettes (24), et
   définition d'un tracé d'un bord (26) du verre de lunette (28) ou du verre de lunette gauche (28) et du verre de lunette droit (29) par optimisation de la fonction de coût E(u).

2. Procédé selon la revendication 1, **caractérisé en ce que** les données d'information I(x) calculées dérivées à partir des données d'image b(x) comprennent une image d'information d'arête g(x) déterminée à partir des données d'image b(x) acquises au moyen d'un algorithme de détection d'arête.

3. Procédé selon la revendication 2, **caractérisé en ce que** l'algorithme de détection d'arête contient un détecteur d'arête du groupe contenant gradient, gradient de couleur, détecteur de bord de Canny, filtre directif, notamment filtre de Sobel, ou **en ce que** l'algorithme de détection d'arête, pour la détection d'arête, accède à un groupe de filtres ayant des détecteurs d'arête formés par apprentissage ou **en ce que** l'algorithme de détection d'arête est configuré sous la forme d'un algorithme à auto-apprentissage qui apprend avec le procédé de l'apprentissage automatique.

4. Procédé selon la revendication 1, **caractérisé en ce que** les données d'information I(x) calculées dérivées à partir des données d'image b(x) comprennent une image d'information de couleur f(x) déterminée à partir des données d'image b(x) acquises au moyen d'un algorithme d'interprétation de couleur qui interprète la couleur des données d'image b(x).

5. Procédé selon l'une des revendications 2 ou 3, **caractérisé en ce que** les données d'information I(x) calculées dérivées à partir des données d'image b(x) comprennent une image d'information de couleur f(x) déterminée à partir des données d'image b(x) acquises au moyen d'un algorithme d'interprétation de couleur qui interprète la couleur des données d'image.

6. Procédé selon la revendication 4 ou 5, **caractérisé en ce que** la fonction de coût E(u) est une somme pondérée d'un terme de coût de détection d'arête $E_g(u)$ et d'un terme de coût d'interprétation de couleur $E_f(u)$.

7. Procédé selon la revendication 6, **caractérisé en ce que** le calcul des données d'information I(x) dérivées à partir des données d'image comprend la détermination de données d'informations de réflexion s(x) avec un algorithme pour la reconnaissance de réflexions sur la monture de lunettes et/ou d'un verre de lunette accueilli dans la monture de lunettes.

8. Procédé selon la revendication 7, **caractérisé en ce que** l'algorithme d'interprétation de couleur et/ou l'algorithme de détection d'arête tiennent compte des données d'informations de réflexion s(x) calculées à partir des données d'image b(x).

9. Procédé selon l'une des revendications 6 à 8, **caractérisé en ce que** le calcul des données d'information I(x) dérivées à partir des données d'image b(x) comprend la détermination de données d'informations de caractéristiques faciales m(x) avec un algorithme pour la reconnaissance de caractéristiques faciales qui est conçu pour la reconnaissance d'une ou plusieurs caractéristiques faciales du groupe composé de l'oeil, de la pupille, du sourcil, du nez ou de la bouche.

10. Procédé selon la revendication 8 ou 9, **caractérisé en ce que** l'algorithme d'interprétation de couleur et/ou l'algorithme de détection d'arête tiennent compte des données d'informations de caractéristiques faciales m(x) calculées à partir des données d'image b(x).

11. Procédé selon l'une des revendications 1 à 9, **caractérisé en ce que** la fonction de coût E(u), pour la détermination du bord (26) d'un verre de lunette gauche (28) et d'un verre de lunette droit (29) pour un porteur de lunettes (20), évalue la symétrie des données de verre de lunette u(x) et/ou **en ce que** la fonction de coût E(u), pour la détermination du bord (26) d'un verre de lunette gauche (28) et d'un verre de lunette droit (29) pour un porteur de lunettes (20), évalue des points représentés les uns sur les autres avec une condition stéréoscopique dans les données de verre de lunette u(x) relatifs à des images qui correspondent à des directions d'enregistrement (19) différentes des dispositifs d'acquisition d'images (14, 16, 18).

12. Procédé selon l'une des revendications 6 à 10, **caractérisé en ce que** le calcul des données d'information I(x) dérivées à partir des données d'image b(x) comprend la détermination de données d'informations de forme de verre de lunette di(x) avec un algorithme, lequel indique, à l'aide d'une pluralité de modèles de verre de lunette acheminés à l'algorithme sous la forme de données d'informations de forme de verre de lunette di(x), un modèle paramétrique ou une carte représentant des probabilités à propos de la probabilité pour que les données d'image b(x) acquises se trouvent sur un verre de lunette (28, 29),

    et/ou
    **en ce que** le calcul des données d'information I(x) dérivées à partir des données d'image b(x) comprend la détermination de données d'informations de forme de verre de lunette di(x) avec un algorithme (34), lequel indique, à l'aide d'un modèle de verre de lunette acheminé à l'algorithme ou à l'aide d'une pluralité de modèles de verre de lunette acheminés à l'algorithme sous la forme de données d'informations de forme de verre de lunette di(x), une forme 2D ou une forme 3D d'un verre de lunette (28, 29) qui peut être accueilli dans la monture de lunettes (24),
    et/ou
    **en ce que** l'algorithme d'interprétation de couleur tient compte des données d'informations de forme de verre de lunette di(x) calculées à partir des données d'image b(x).

13. Procédé selon l'une des revendications 1 à 12, **caractérisé en ce que** les données d'information I(x) dérivées à partir des données d'image b(x) comprennent un centre de pont M déterminé au moyen d'un algorithme de détection de centre de pont,
    et/ou
    **en ce que** les données d'image b(x) fournies à propos du porteur de lunettes (20) se basent sur des images capturées depuis au moins deux angles d'observation différents.

14. Programme informatique comprenant un code de programme qui, lorsqu'il est chargé et exécuté dans un système informatique, est conçu pour mettre en oeuvre un procédé selon l'une des revendications précédentes.

15. Dispositif de détermination automatique du tracé du bord d'un verre de lunette (28) ou d'un verre de lunette gauche (28) et d'un verre de lunette droit (29) pour un porteur de lunettes (20),

    comprenant
    au moins un dispositif d'acquisition d'images (14, 16, 18) destiné à fournir une image (36) du porteur de lunettes (20) avec des données d'image b(x) à propos du porteur de lunettes (20) qui porte une monture de lunettes (24), des moyens pour déterminer un cadrage d'image (38) de l'image (36) du porteur de lunettes (20) à partir de ses caractéristiques faciales ;
    des moyens pour calculer des données d'information I(x) dérivées à partir des données d'image b(x), les données d'information I(x) étant des données d'information d'arête (46) calculées à partir de données de cadrage d'image $b_A(x)$ du cadrage d'image (38) ;

des moyens pour calculer une fonction de coût E(u) qui lie les données d'information I(x) à des données de verre de lunette u(x), les données de verre de lunette u(x) décrivant l'étendue dans l'espace d'au moins un verre de lunette (28) maintenu dans la monture de lunettes (24) sous la forme d'une fonction binaire $u : \Omega \rightarrow \{0,1\}$ et $\Omega \subset \Re^2$ décrivant les coordonnées d'image, la fonction binaire $u : \Omega \rightarrow \{0,1\}$ prenant la valeur 1 à l'intérieur de la surface du verre de lunettes et la valeur 0 à l'extérieur de la surface du verre de lunettes, la dérivation distributive de la fonction binaire $u : \Omega \rightarrow \{0,1\}$ et $\Omega \subset \Re^2$ correspondant au bord (26) du verre de lunettes (28), et les coordonnées d'image étant les coordonnées d'image du cadrage d'image (38) de l'image (36) du porteur de lunettes (20) qui porte une monture de lunettes (24), et

des moyens pour définir un tracé d'un bord (26) du verre de lunette (28) ou du verre de lunette gauche (28) et du verre de lunette droit (29) par optimisation de la fonction de coût E(u).

Fig.1

Fig.2

24

PD

PD/2 | PD/2

28

29

## Fig.3a

28  29  24

E  E

## Fig.3b

24  28

HS

## Fig.3c

Fig.3d

Fig.3e

Fig.3f

EP 3 355 104 B2

```
┌──────────────┐        ┌──────┐               ┌──────┐
│  Kalibrier-  │        │ Bild │ ～37      36～ │ Bild │                              ～34
│ Informationen│ ～39   └──────┘               └──────┘
└──────────────┘           │                      │
                         ┌────┐                 ┌────┐
                         │b(x)│                 │b(x)│  ～40
                         └────┘                 └────┘
                                        ┌──────────────────┐
                                    38  │  Gesichtsmerkmale │─ ─ ─ ─ ─ ─ ─ ─ ─ ─ ─ ─ ┐
                                        └──────────────────┘
                              ┌────────────────────────┐ ┌──────┐ ┌──────────────────┐  ┌────┐
                              │ relevanter Bildausschnitt│─│bₐ(x) │ │ Spiegelungsdetektion│ │m(x)│
                              └────────────────────────┘ └──────┘ └──────────────────┘  └────┘
                   64   ┌──────┐   ┌──────┐   ┌──────┐         │        58
                        │bₐ(x) │   │bₐ(x) │   │bₐ(x) │       ┌────┐
                        └──────┘   └──────┘   └──────┘       │s(x)│              50
              ┌──────────────┐ ┌──────────────┐ ┌──────────────┐
              │ Brückenmitte │ │ Kantendetektor│ │  Farbmodell  │
              └──────────────┘ └──────────────┘ └──────────────┘
       69              68            46                          60
┌────────────┐ ┌────┐ ┌──────────────┐ ┌────┐ ┌────┐ ┌──────────────────┐
│ Tiefenkanten│─│t(x)│ │Symmetrieannahmen│ │g(x)│ │f(x)│ │ Brillenglasmodell │
└────────────┘ └────┘ └──────────────┘ └────┘ └────┘ └──────────────────┘
                  │              ┌────┐
           ┌──────────────┐     │r(x)│         70
           │Stereoannahmen │─────└────┘  ┌──────────────┐
           └──────────────┘ ┌────┐       │ Kostenfunktion │
              71            │d(x)│───────└──────────────┘
                           └────┘              │
                                        ┌──────────────┐
                                        │  Optimierung  │ ～75
                                        └──────────────┘
                                        │                   │
                              ┌──────────────────────────┐
                              │ optimierte Brillenglasdaten u(x)│
                              └──────────────────────────┘
                                            │
                              ┌──────────────────────┐
                              │ Segmentierter Glasrand │ ～77
                              └──────────────────────┘
```

Fig.4

Fig.5

Fig.6

Fig.7

Fig.8

Fig.9

Fig.10

Fig.11

Fig.12

66  27  24

Fig.13

Fig.14

56

Fig.15

Fig.16

Fig.17

Fig.18

Fig.19

Fig.20

Fig.21

Fig.22

**IN DER BESCHREIBUNG AUFGEFÜHRTE DOKUMENTE**

**In der Beschreibung aufgeführte Patentdokumente**

- WO 0184222 A1

- DE 102011115239 A1

**In der Beschreibung aufgeführte Nicht-Patentliteratur**

- **D. BORZA et al.** Eyeglasses Lens Contour Extraction from Facial Images Using an Efficient Shape Description. *Sensors,* 2013, vol. 13 (10), 13638-13658
- Spatially Varying Color Distributions for Interactive Multilabel Segmentation. **C. NIEUWENHUIS et al.** IEEE Transactions on Pattern Analysis and Machine Intelligence. IEEE Comüuter Society, 2013, vol. 35, 1234-1247
- Glasses detction on real images based on robust a-lignment. **A. FERNANDEZ et al.** Machine Vision and Applications. Springer Verlag, 2015, vol. 26, 519-531

- Automatic Eyeglasses removal from Face Images. **C. WU et al.** IEEE Transactions on Pattern Analysis and Machine Intelligence. IEEE Comüuter Society, 2004, vol. 26, 332-336
- **RICHARD HARTLEY ; ANDREW ZISSERMAN.** Multiple View Geometry in Computer Vision. Cambridge University Press, 2004
- **C. NIEWENHUIS.** Spatially Varying Color Distributions for Interactive Multilabel Segmentation. *IEEE Transactions on Pattern Analysis and Machine Intelligence,* 2013, vol. 35, 1